# EUROPÄISCHE PATENTSCHRIFT

(11) **EP 3 725 055 B1**
(45) Veröffentlichungstag und Bekanntmachung des Hinweises auf die Patenterteilung: **09.02.2022**
(21) Anmeldenummer: 18815632.7
(22) Anmeldetag: 05.12.2018
(51) Int. Cl.: H04L 29/06, H04L 29/08, H04W 4/40, H04W 12/108, B60R 25/04

(54) **VORRICHTUNGEN, VERFAHREN UND COMPUTERPROGRAMM ZUM FREISCHALTEN VON FAHRZEUGKOMPONENTEN, FAHRZEUG-ZU-FAHRZEUG-KOMMUNIKATIONSMODUL**
DEVICES, METHODS, AND COMPUTER PROGRAM FOR RELEASING VEHICLE COMPONENTS, AND VEHICLE-TO-VEHICLE COMMUNICATION MODULE
DISPOSITIFS, PROCÉDÉ ET PROGRAMME INFORMATIQUE POUR LA DÉCONNEXION DE COMPOSANTS DE VÉHICULE, MODULE DE COMMUNICATION VÉHICULE-À-VÉHICULE

(30) Priorität: 15.12.2017 DE 102017222882
(43) Veröffentlichungstag der Anmeldung: 21.10.2020
(73) Patentinhaber: VOLKSWAGEN AKTIENGESELLSCHAFT, 38440 Wolfsburg (DE)
(72) Erfinder: WINKELVOS, Timo, 38173 Sickte (DE); TSCHACHE, Alexander, 38436 Wolfsburg (DE)
(86) Internationale Anmeldenummer: PCT/EP2018/083641
(87) Internationale Veröffentlichungsnummer: WO 2019/115312

(56) Entgegenhaltungen:
- DE-A1-102008 015 195
- US-A1- 2009 288 175

## Beschreibung

Die vorliegende Erfindung bezieht sich auf Vorrichtungen, Verfahren und ein Computerprogramm zum Freischalten von Fahrzeugkomponenten sowie auf ein Fahrzeug-zu-Fahrzeug-Kommunikationsmodul, genauer, aber nicht ausschließlich, auf ein Freischalten einer Fahrzeugkomponente basierend auf Nachrichten von weiteren Fahrzeugkomponenten, die im Regelbetrieb der Fahrzeugkomponente empfangen werden.

Fahrzeuge umfassen eine Vielzahl von verschiedenen Fahrzeugkomponenten - von den Antriebsmodulen wie dem Getriebe und dem Motor über Kommunikationsmodule wie einer Fahrzeug-zu-Fahrzeug-Kommunikationsschnittstelle oder einer Mobilfunkschnittstelle bis zu Komfortfunktionen wie Sitzheizungen. Um Diebstähle von Fahrzeugkomponenten zu verhindern und sicherzustellen, dass Fahrzeugkomponenten nur in dem Fahrzeug genutzt werden, in das sie durch den Hersteller oder eine Fachwerkstatt eingesetzt wurden, kann es erstrebenswert sein, die Fahrzeugkomponenten an ein Fahrzeug zu koppeln und lediglich zur Nutzung freizuschalten, wenn sie sich in dem richtigen Fahrzeug befinden.

Die Europäische Patentanmeldung EP 3 148 152 A1 zeigt ein Verfahren zum sicheren Verteilen von kryptografischen Schlüsseln für Steuergeräte von Fahrzeugen. Die Europäische Patentanmeldung EP 3 157 281 A1 zeigt ein Verfahren zur geschützten Kommunikation eines Fahrzeugs, das ebenfalls auf dem Erzeugen und Verteilen von Schlüsselpaaren basiert.

Die deutsche Patentanmeldung DE 10 2008 015195 A1 befasst sich mit einer Fahrzeugkomponente mit einer Bus-Schnittstelle zu einem Fahrzeugbus. Die Fahrzeugkomponente empfängt Prüfdaten von anderen Fahrzeugkomponenten und vergleicht diese mit charakteristischen Daten über die Fahrzeugkomponenten. Basierend auf dem Vergleich werden Funktionen der Fahrzeugkomponente aktiviert oder deaktiviert. Dabei kann die Prüfung bei Aktivierung der Fahrzeugkomponente oder bei der Aktivierung von Funktionen der Fahrzeugkomponenten erfolgen, aber auch regelmäßig während des Betriebs. In manchen Ausführungsformen wird dabei überprüft, ob die Prüfdaten einem erwarteten Wert entsprechen oder ob die Prüfdaten innerhalb eines Wertebereichs liegen. Alternativ kann die Überprüfung auf einer Überprüfung von kryptographischen Schlüsselinformationen basieren.

US-Patentanmeldung US 2009/288175 A1 befasst sich mit einem Diebstahlschutzsystem für Fahrzeugkomponenten Dabei werden sogenannte elektrische Fahrzeugsystemidentifikationsdaten (engl. "vehicle electrical system identifier") zwischen entsprechenden Modulen einer zentralen Instanz und der Fahrzeugkomponenten ausgetauscht. Die zentrale Instanz hält die Identifikationsdaten der Fahrzeugkomponenten vor, und verweigert den Betrieb der Fahrzeugkomponenten, falls die Identifikationsdaten nicht mit den gespeicherten Daten übereinstimmen.

Es besteht der Bedarf nach einem verbesserten Konzept zum Freischalten einer Nutzung von Fahrzeugkomponenten.

Diesem Bedarf wird durch die Vorrichtungen, Verfahren und das Computerprogramm sowie das Fahrzeug-zu-Fahrzeug-Kommunikationsmodul der unabhängigen Ansprüche Rechnung getragen.

Ausführungsbeispiele schaffen Vorrichtungen, Verfahren und ein Computerprogramm zum Freischalten einer Fahrzeugkomponente eines Fahrzeugs sowie ein Fahrzeug-zu-Fahrzeug-Kommunikationsmodul. Freischalten bezieht sich im Folgenden darauf, dass die Fahrzeugkomponente, die freigeschalten wird, in einem Regelbetrieb des Fahrzeugs genutzt werden kann. Vor der Freischaltung einer Fahrzeugkomponente kann beispielsweise eine Diagnose der Fahrzeugkomponente oder Funktionalität, die zur Freischaltung der Fahrzeugkomponente notwendig ist ausgeführt werden. Der volle Funktionsumfang der Fahrzeugkomponente, beispielsweise das Senden und Empfangen von Fahrzeug-zu-Fahrzeug-Kommunikationssignalen im Falle eines Fahrzeug-zu-Fahrzeug-Kommunikationsmoduls, kann beispielsweise erst nach dem Freischalten der Fahrzeugkomponente genutzt werden.

In zumindest einigen Ausführungsbeispielen basiert die Freischaltung auf einer Nutzung von Nachrichten zwischen Fahrzeugkomponenten, die im Regelbetrieb des Fahrzeugs versendet werden oder die im Regelbetrieb der Fahrzeugkomponente empfangen werden, etwa ohne, dass eine zweiseitige Kommunikation zwischen der freizuschaltenden Fahrzeugkomponente und weiteren Fahrzeugkomponenten, von denen die Nachrichten stammen, durchgeführt wird. Diese Nachrichten können darauf geprüft werden, ob sie von den weiteren Fahrzeugkomponenten stammen, die von der freizuschaltenden Fahrzeugkomponente erwartet werden, beispielsweise durch eine Plausibilisierung eines Inhalts der Nachricht, durch Prüfen einer kryptografisch gesicherten Nachricht oder Prüfen eines kryptografisch generierten Werts. Kommt die freizuschaltende Fahrzeugkomponente zu dem Schluss, dass die weiteren Fahrzeugkomponenten diejenigen sind, die in dem "richtigen" Fahrzeug verbaut sind, so kann die freizuschaltende Fahrzeugkomponente freigeschalten werden.

Ausführungsbeispiele schaffen eine Vorrichtung zum Freischalten einer Fahrzeugkomponente eines Fahrzeugs. Die Vorrichtung umfasst zumindest eine Schnittstelle, ausgebildet zur Kommunikation mit einer Mehrzahl von weiteren Fahrzeugkomponenten des Fahrzeugs. Die Vorrichtung umfasst ferner ein Kontrollmodul, ausgebildet zum Steuern der zumindest einen Schnittstelle. Das Kontrollmodul ist ausgebildet zum Empfangen von Nachrichten der Mehrzahl von weiteren Fahrzeugkomponenten des Fahrzeugs. Das Kontrollmodul ist ausgebildet zum Verifizieren einer Identität der Mehrzahl von weiteren Fahrzeugkomponenten basierend auf den empfangenen Nachrichten und basierend auf gespeicherten Identifikationsdaten der Mehrzahl von weiteren Fahrzeugkomponenten. Die Nachrichten, auf denen die Verifizierung der Identität der Mehrzahl von weiteren Fahrzeugkomponenten basiert, sind Nachrichten, die zum Regelbetrieb der Fahrzeugkomponente genutzt werden. In anderen Worten können Nachrichten, auf denen die Verifizierung der Identität der Mehrzahl von weiteren Fahrzeugkomponenten basiert, Nachrichten sein, die nicht ausschließlich zum Zweck der Verifizierung der Identität der Mehrzahl von weiteren Fahrzeugkomponenten über die zumindest eine Schnittstelle empfangen werden. Das Kontrollmodul ist ferner ausgebildet zum Freischalten der Fahrzeugkomponente, falls die Identität der Mehrzahl von weiteren Fahrzeugkomponenten in Einklang steht mit den gespeicherten Identifikationsdaten der Mehrzahl von weiteren Fahrzeugkomponenten.

Die Nutzung von Nachrichten, die zum Regelbetrieb der Fahrzeugkomponente genutzt werden, kann eine zweiseitige Kommunikation zur Authentifizierung der Fahrzeugkomponente ersetzen und damit einen Overhead (engl. für zusätzliche Kommunikation zu Verwaltungszwecken) reduzieren. So kann die Fahrzeugkomponente die Nachrichten empfangen, zwischenspeichern, anhand der zwischengespeicherten Nachrichten feststellen, ob es sich im "richtigen" Fahrzeug befindet und dann den Regelbetrieb aufnehmen.

In manchen Ausführungsbeispielen ist das Kontrollmodul ausgebildet, um die Identität der Mehrzahl von weiteren Fahrzeugkomponenten basierend auf kryptografisch geschützten Nachrichten der Mehrzahl von weiteren Fahrzeugkomponenten zu verifizieren. Dies kann beispielsweise die Verifikation der Identität der Mehrzahl von weiteren Fahrzeugkomponenten mittels erprobter kryptografischer Methoden ermöglichen. Beispielsweise können die kryptografisch geschützten Nachrichten kryptografisch signiert sein. Alternativ oder zusätzlich können die kryptografisch geschützten Nachrichten kryptografisch verschlüsselt sein. Durch Prüfung der Signatur oder durch Entschlüsseln der Nachrichten basierend auf zumindest einem vorbekannten Schlüssel kann etwa die Identität der kommunizierenden Fahrzeugkomponente festgestellt oder verifiziert werden. Alternativ oder zusätzlich können die kryptografisch geschützten Nachrichten einen basierend auf einem kryptografischen Schlüssel berechneten Wert umfassen. So können beispielsweise alle oder ein Verbund von Fahrzeugkomponenten eines Fahrzeugs den gleichen Schlüssel umfassen. Berechnen diese aus diesem Schlüssel und einer Zufallszahl einen Wert, so kann dieser Wert von einer weiteren Fahrzeugkomponente mit dem gleichen Schlüssel anhand der Zufallszahl verifiziert werden, und somit die Zugehörigkeit der Fahrzeugkomponenten zum gleichen Fahrzeug oder zum gleichen Verbund von Fahrzeugen festgestellt werden. Dabei kann die Zufallszahl beispielsweise von einer Fahrzeugkomponente ("Senke", etwa die Fahrzeugkomponente) bereitgestellt werden, die von einer anderen Fahrzeugkomponente ("Quelle", etwa die weitere Fahrzeugkomponente) den berechneten Wert anfordert, um die Identität der anderen Fahrzeugkomponente zu verifizieren (Anforderung-Antwort-Verfahren, auch engl. Challenge-Response), oder die Zufallszahl kann von einer unabhängigen dritten ("vertrauenswürdigen") Instanz bereitgestellt oder aus ihr abgeleitet werden.

Beispielsweise können die Identifikationsdaten der Mehrzahl von weiteren Fahrzeugkomponenten kryptografische Informationen über die Mehrzahl von weiteren Fahrzeugkomponenten umfassen. Die Verifikation der Identität der Mehrzahl von weiteren Fahrzeugkomponenten kann erfolgreich sein, falls die kryptografisch geschützten Nachrichten der Mehrzahl von weiteren Fahrzeugkomponenten in Einklang stehen mit den gespeicherten kryptografischen Informationen. Anhand dieser Daten kann die Identität der Mehrzahl von weiteren Fahrzeugkomponenten festgestellt oder verifiziert werden. Beispielsweise können die Identifikationsdaten der Mehrzahl von weiteren Fahrzeugkomponenten den Schlüssel des Fahrzeugs oder Verbunds umfassen, oder für jede Kommunikation zwischen zwei Fahrzeugkomponenten kann ein (gemeinsamer) Schlüssel umfasst sein. Denkbar ist auch ein System mit privaten und öffentlichen Schlüsseln, wobei die Identifikationsdaten der Mehrzahl von weiteren Fahrzeugkomponenten die öffentlichen Schlüssel der Mehrzahl von weiteren Fahrzeugkomponenten umfassen können.

In manchen Ausführungsbeispielen kann die Verifikation der Identität der Mehrzahl von weiteren Fahrzeugkomponenten erfolgreich sein, falls ein Anteil von innerhalb eines vordefinierten Zeitintervalls empfangenen kryptografisch geschützten Nachrichten der Mehrzahl von weiteren Fahrzeugkomponenten, die im Einklang stehen mit den gespeicherten kryptografischen Informationen, höher ist als ein Konfidenzschwellenwert. So kann beispielsweise der Fall abgedeckt werden, dass sich lediglich ein Teil von Fahrzeugkomponenten ändert - solange noch genügend andere Fahrzeugkomponenten identifiziert werden können, kann die Fahrzeugkomponente den Dienst aufnehmen.

In einigen Ausführungsbeispielen kann das Kontrollmodul ausgebildet sein, um die Identität der Mehrzahl von weiteren Fahrzeugkomponenten durch eine Plausibilitätsprüfung eines Inhalts der empfangenen Nachrichten zu verifizieren. So kann beispielsweise eine Identifizierung der weiteren Fahrzeugkomponenten möglich sein, ohne dass kryptografisch gesicherte Nachrichten verwendet werden müssen.

Beispielsweise kann die Mehrzahl von weiteren Fahrzeugkomponenten einen Antriebsmotor des Fahrzeugs und/oder ein Getriebe des Fahrzeugs umfassen. Durch die Einbeziehung integraler Komponenten des Fahrzeugs kann eine erhöhte Sicherheit ermöglicht werden. Beispielsweise kann die Mehrzahl von weiteren Fahrzeugkomponenten zumindest drei (oder zumindest vier, zumindest fünf) Fahrzeugkomponenten des Fahrzeugs umfassen. Je größer die Anzahl von Fahrzeugkomponenten ist, die einbezogen werden, desto größer kann die Sicherheit sein, dass sich die Fahrzeugkomponente im "richtigen" Fahrzeug befindet.

Beispielsweise kann zumindest eine Fahrzeugkomponente der Mehrzahl von weiteren Fahrzeugkomponenten Teil eines gesicherten Verbunds von Fahrzeugkomponenten des Fahrzeugs sein. Dies kann ebenfalls die Sicherheit erhöhen, da transitiv die Freischaltung der Fahrzeugkomponente durch den gesicherten Verbund genutzt werden kann.

In einem beispielhaften Ausführungsbeispiel kann die Fahrzeugkomponente ein Fahrzeug-zu-Fahrzeug-Kommunikationsmodul sein. Die empfangenen Nachrichten, auf denen die Verifizierung der Identität der Mehrzahl von weiteren Fahrzeugkomponenten basiert, können zumindest ein Element der Gruppe von Positionsdaten eines Navigationssatellitensystems zur Positionsbestimmung des Fahrzeugs, Lenkwinkelinformation des Fahrzeugs und Geschwindigkeitsinformation des Fahrzeugs umfassen. Eine Fahrzeug-zu-Fahrzeug-Kommunikation des Fahrzeug-zu-Fahrzeug-Kommunikationsmoduls kann auf der Freischaltung des Fahrzeug-zu-Fahrzeug-Kommunikationsmoduls basieren. Ein Fahrzeug-zu-Fahrzeug-Kommunikationsmodul kann eine Vielzahl von Nachrichten von anderen Fahrzeugkomponenten erhalten, etwa einen Lenkwinkel, eine Position etc., um diese über periodische Status-Nachrichten anderen Fahrzeugen als Rundfunk (auch engl. Broadcast) zu übertragen. Diese Vielzahl von Nachrichten kann genutzt werden um das Fahrzeug-zu-Fahrzeug-Kommunikationsmodul freizuschalten, ohne, dass eine explizite zweiseitige Kommunikation zur Freischaltung benötigt wird. Ausführungsbeispiele schaffen ferner ein Fahrzeug-zu-Fahrzeug-Kommunikationsmodul mit der Vorrichtung gemäß einem der vorhergehenden Ausführungsbeispiele.

Ausführungsbeispiele schaffen ferner eine weitere Vorrichtung zum Freischalten einer ersten Fahrzeugkomponente eines Fahrzeugs. Die weitere Vorrichtung umfasst zumindest eine Schnittstelle, ausgebildet zur Kommunikation mit einer zweiten Fahrzeugkomponente des Fahrzeugs. Die zweite Fahrzeugkomponente wird durch eine Vorrichtung gemäß einem der vorherigen Ausführungsbeispiele freigeschalten. Die weitere Vorrichtung umfasst ein Kontrollmodul, ausgebildet zum Steuern der zumindest einen Schnittstelle. Das Kontrollmodul ist ausgebildet zum Empfangen zumindest einer Nachricht von der zweiten Fahrzeugkomponente über die zumindest eine Schnittstelle. Das Kontrollmodul ist ferner ausgebildet zum Legitimieren der zweiten Fahrzeugkomponente basierend auf der zumindest einen von der zweiten Fahrzeugkomponente empfangenen Nachricht. Das Kontrollmodul ist ferner ausgebildet zum Freischalten der ersten Fahrzeugkomponente, falls die zumindest eine empfangene Nachricht impliziert, dass die zweite Fahrzeugkomponente durch die Vorrichtung gemäß einem der vorherigen Ausführungsbeispiele freigeschalten wurde und falls die Legitimierung der zweiten Fahrzeugkomponente erfolgreich ist.

Das Nutzen einer bereits freigeschaltenen Fahrzeugkomponente, die durch die Vorrichtung, wie sie zuvor beschrieben wurde, freigeschalten wurde, für die Entscheidung, ob die Fahrzeugkomponente freigeschalten werden kann, ermöglicht die Nutzung der Sicherheitsfunktionen, die zur Freischaltung dieser Fahrzeugkomponente führten, ohne dass die Fahrzeugkomponente selbst diese Sicherheitsfunktionen implementieren muss.

Ausführungsbeispiele schaffen ferner ein Verfahren zum Freischalten einer Fahrzeugkomponente eines Fahrzeugs. Das Verfahren umfasst Empfangen von Nachrichten einer Mehrzahl von weiteren Fahrzeugkomponenten des Fahrzeugs. Das Verfahren umfasst ferner Verifizieren einer Identität der Mehrzahl von weiteren Fahrzeugkomponenten basierend auf den empfangenen Nachrichten und basierend auf gespeicherten Identifikationsdaten der Mehrzahl von weiteren Fahrzeugkomponenten. Die Nachrichten, auf denen die Verifizierung der Identität der Mehrzahl von weiteren Fahrzeugkomponenten basiert, sind Nachrichten, die zum Regelbetrieb der Fahrzeugkomponente genutzt werden. Das Verfahren umfasst ferner Freischalten der Fahrzeugkomponente, falls die Identität der Mehrzahl von weiteren Fahrzeugkomponenten in Einklang steht mit den gespeicherten Identifikationsdaten der Mehrzahl von weiteren Fahrzeugkomponenten.

Die Nutzung von Nachrichten, die zum Regelbetrieb der Fahrzeugkomponente genutzt werden, kann eine zweiseitige Kommunikation zur Authentifizierung der Fahrzeugkomponente ersetzen und damit einen Overhead (engl. für zusätzliche Kommunikation zu Verwaltungszwecken) reduzieren. So kann die Fahrzeugkomponente die Nachrichten empfangen, zwischenspeichern, anhand der zwischengespeicherten Nachrichten feststellen, ob es sich im "richtigen" Fahrzeug befindet und dann den Regelbetrieb aufnehmen.

Ausführungsbeispiele schaffen ferner ein Verfahren zum Freischalten einer ersten Fahrzeugkomponente und einer zweiten Fahrzeugkomponente eines Fahrzeugs. Das Verfahren umfasst Empfangen, durch die zweite Fahrzeugkomponente des Fahrzeugs, von Nachrichten einer Mehrzahl von weiteren Fahrzeugkomponenten des Fahrzeugs. Das Verfahren umfasst ferner Verifizieren, durch die zweite Fahrzeugkomponente, einer Identität der Mehrzahl von weiteren Fahrzeugkomponenten basierend auf den empfangenen Nachrichten und basierend auf gespeicherten Identifikationsdaten der Mehrzahl von weiteren Fahrzeugkomponenten. Die Nachrichten, auf denen die Verifizierung der Identität der Mehrzahl von weiteren Fahrzeugkomponenten basiert, sind Nachrichten, die zum Regelbetrieb der zweiten Fahrzeugkomponente genutzt werden. Das Verfahren umfasst ferner Freischalten der zweiten Fahrzeugkomponente, falls die Identität der Mehrzahl von weiteren Fahrzeugkomponenten in Einklang steht mit den gespeicherten Identifikationsdaten der Mehrzahl von weiteren Fahrzeugkomponenten. Das Verfahren umfasst ferner Empfangen, durch die erste Fahrzeugkomponente, zumindest einer Nachricht von der zweiten Fahrzeugkomponente. Das Verfahren umfasst ferner Legitimieren, durch die erste Fahrzeugkomponente, der zweiten Fahrzeugkomponente basierend auf der zumindest einen von der zweiten Fahrzeugkomponente empfangenen Nachricht. Das Verfahren umfasst ferner Freischalten der ersten Fahrzeugkomponente, falls die zumindest eine empfangene Nachricht impliziert, dass die zweite Fahrzeugkomponente freigeschalten wurde und falls die Legitimierung der zweiten Fahrzeugkomponente erfolgreich ist.

Ausführungsbeispiele schaffen ferner ein Programm mit einem Programmcode zum Durchführen zumindest eines der Verfahren, wenn der Programmcode auf einem Computer, einem Prozessor, einem Kontrollmodul oder einer programmierbaren Hardwarekomponente ausgeführt wird.

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:
- Fig. 1a: zeigt ein Blockdiagramm einer Vorrichtung zum Freischalten einer Fahrzeugkomponente;
- Fig. 1b: zeigt ein Flussdiagramm eines Verfahrens zum Freischalten einer Fahrzeugkomponente;
- Fig. 2a: zeigt ein Blockdiagramm einer weiteren Vorrichtung zum Freischalten einer Fahrzeugkomponente;
- Fig.: 2bzeigt ein Flussdiagramm eines weiteren Verfahrens zum Freischalten einer Fahrzeugkomponente; und
- Fign. 3a-3e: zeigen Ausführungsbeispiele einer skalierbaren Verbundauthentifikation.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen " einer," " eine", "eines " und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

Zumindest manche Ausführungsbeispiele schaffen transitiv und quantitativ skalierbare Verbundauthentifikationen in einem Fahrzeug (oder genereller in einem verteilten System).

In einem beispielhaften Ausführungsbeispiel darf ein Car2Car (Fahrzeug-zu-Fahrzeug) Steuergerät (das etwa für eine digitale Dachantenne genutzt werden kann) nicht außerhalb des Fahrzeugs zum Senden von C2C-Nachrichten verwendet werden. Die Erlaubnis des Sendens kann beispielsweise verschiedene Eigenschaften des Fahrzeugzustands voraussetzen, die kombiniert eine qualitative und quantitative Erhöhung des Vertrauens in die Eigenschaft ermöglichen können. Auch einige andere Funktionen, die fahrzeugextern senden, können beispielsweise verlangen, dass (nur) das echte Fahrzeug sendet. Dieses Konzept kann beispielsweise auf andere Steuergeräte im Fahrzeug übertragen werden, die nicht außerhalb des Fahrzeugs nutzbar sein sollen, das Konzept ist nicht auf Car2Car-Steuergeräte beschränkt.

In manchen Systemen kann festgestellt werden, ob sich ein Steuergerät in einem bestimmten Fahrzeug befindet, indem die Fahrzeugidentifikationsnummer (auch engl. Vehicle Identification Number, VIN) über den Fahrzeug-Bus geprüft wird. Alternativ oder zusätzlich kann das entsprechende Steuergerät in den Wegfahrsperrenverbund und/oder in den Komponentenschutz (Schutz von Komponenten vor Diebstahl) angebunden werden. Dabei können diese Anbindungen Funktionen sein, die direkt nur dafür vorgesehen sind die Zugehörigkeit des Steuergeräts zum Fahrzeug festzustellen, d.h. zusätzliche Funktion(en). Die Anbindungen können mit einer separaten Funktion zur Feststellung, ob sich das Fahrzeug in einem authentifizierten Verbund befindet (in der Regel einem Master/Slave (engl. Herr-Sklave) System) genutzt werden. Es kann beachtet werden, dass das Prüfen der VIN technisch in manchen Fällen nicht ausreichend sein kann, da ein Angreifer möglicherweise die VIN manipulieren (auch aus dem engl. entlehnt "spoofen") könnte. Im Fall der Anbindung des Steuergeräts in den Wegfahrsperrenverbund kann etwa das Risiko bestehen, dass das Fahrzeug bei Problemen mit dem Steuergerät stillgelegt werden kann, wobei das Steuergerät mit der Freigabe der Wegfahrsperre aus Diebstahlschutzsicht eigentlich nichts zu tun hat. Zudem kann bei der Anbindung eine zusätzliche Funktion ohne funktionalen Nutzen für das Steuergerät integriert werden, und damit Overhead (zusätzlicher Verwaltungsaufwand) geschaffen werden. Zudem kann eine Skalierung schwierig sein, da diese Anbindungen meist Master/Slave-Systeme sind, d.h. das Steuergerät kann beispielsweise nur die Anwesenheit eines weiteren Steuergeräts feststellen.

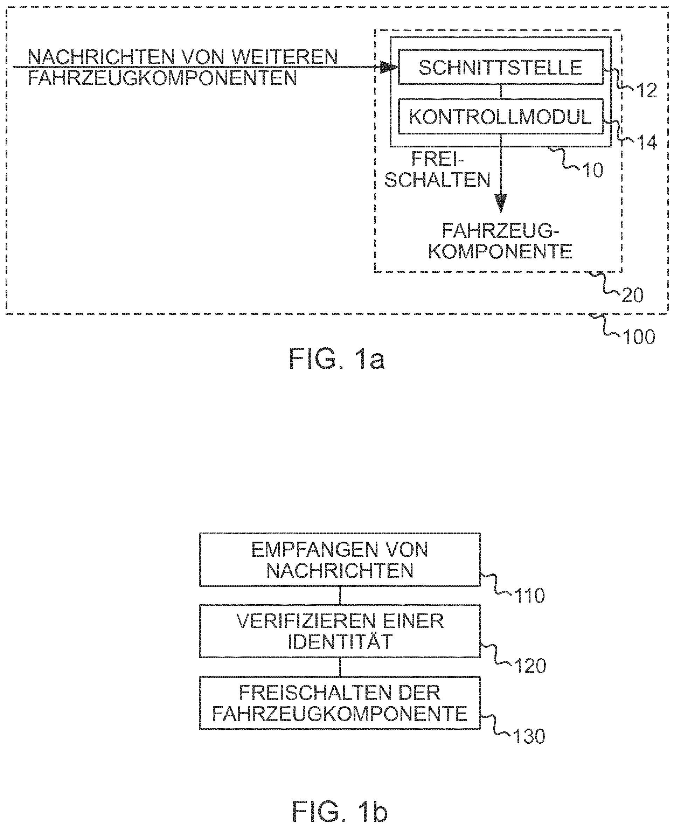

Fig. 1a zeigt ein Blockdiagramm einer Vorrichtung 10 zum Freischalten einer Fahrzeugkomponente 20 eines Fahrzeugs 100. Die Vorrichtung 10 umfasst zumindest eine Schnittstelle 12, ausgebildet zur Kommunikation mit einer Mehrzahl von weiteren Fahrzeugkomponenten des Fahrzeugs 100. Die Vorrichtung 10 umfasst ferner ein Kontrollmodul 14 ausgebildet zum Steuern der zumindest einen Schnittstelle 12. Das Kontrollmodul 14 ist ferner ausgebildet zum Empfangen von Nachrichten der Mehrzahl von weiteren Fahrzeugkomponenten des Fahrzeugs. Das Kontrollmodul 14 ist ferner ausgebildet zum Verifizieren einer Identität der Mehrzahl von weiteren Fahrzeugkomponenten basierend auf den empfangenen Nachrichten und basierend auf gespeicherten Identifikationsdaten der Mehrzahl von weiteren Fahrzeugkomponenten. Die Nachrichten, auf denen die Verifizierung der Identität der Mehrzahl von weiteren Fahrzeugkomponenten basiert, sind Nachrichten, die zum Regelbetrieb der Fahrzeugkomponente 20 genutzt werden. In anderen Worten, die Nachrichten, auf denen die Verifizierung der Identität der Mehrzahl von weiteren Fahrzeugkomponenten basiert, können Nachrichten sein, die nicht ausschließlich zum Zweck der Verifizierung der Identität der Mehrzahl von weiteren Fahrzeugkomponenten über die zumindest eine Schnittstelle 12 empfangen werden. Das Kontrollmodul 14 ist ferner ausgebildet zum Freischalten der Fahrzeugkomponente 20, falls die Identität der Mehrzahl von weiteren Fahrzeugkomponenten in Einklang steht mit den gespeicherten Identifikationsdaten der Mehrzahl von weiteren Fahrzeugkomponenten.

Fig. 1a zeigt ferner die Fahrzeugkomponente 20 umfassend die Vorrichtung 10, und das Fahrzeug 100 umfassend die Fahrzeugkomponente 20 mit der Vorrichtung 10. Das Fahrzeug kann ferner die Mehrzahl von weiteren Fahrzeugkomponenten umfassen. Die zumindest eine Schnittstelle 12 ist mit dem Kontrollmodul 14 gekoppelt.

Fig. 1a zeigt ein entsprechendes Verfahren zum Freischalten der Fahrzeugkomponente 20 des Fahrzeugs 100. Das Verfahren umfasst Empfangen 110 von Nachrichten einer Mehrzahl von weiteren Fahrzeugkomponenten des Fahrzeugs 100. Das Verfahren umfasst ferner Verifizieren 120 einer Identität der Mehrzahl von weiteren Fahrzeugkomponenten basierend auf den empfangenen Nachrichten und basierend auf gespeicherten Identifikationsdaten der Mehrzahl von weiteren Fahrzeugkomponenten. Die Nachrichten, auf denen die Verifizierung der Identität der Mehrzahl von weiteren Fahrzeugkomponenten basiert, sind Nachrichten, die zum Regelbetrieb der Fahrzeugkomponente 20 genutzt werden. Das Verfahren umfasst ferner Freischalten 130 der Fahrzeugkomponente 20, falls die Identität der Mehrzahl von weiteren Fahrzeugkomponenten in Einklang steht mit den gespeicherten Identifikationsdaten der Mehrzahl von weiteren Fahrzeugkomponenten. Die folgende Beschreibung bezieht sich sowohl auf die Vorrichtung 10 von Fig. 1a als auch auf das Verfahren von Fig. 1b.

Das Freischalten von Fahrzeugkomponenten bezeichnet in zumindest manchen Ausführungsbeispielen das Freigeben oder Aktivieren eines Regelbetriebs der Fahrzeugkomponente und/oder das Freischalten einer Nutzung der Fahrzeugkomponente. Vor der Freischaltung einer Fahrzeugkomponente kann beispielsweise eine Diagnose der Fahrzeugkomponente oder Funktionalität, die zur Freischaltung der Fahrzeugkomponente notwendig ist, ausgeführt werden. Durch das Freischalten der Fahrzeugkomponente kann der volle Funktionsumfang der Fahrzeugkomponente freigegeben werden. Das Freischalten der Fahrzeugkomponente kann beispielsweise die Nutzung der Fahrzeugkomponente im Regelbetrieb aktivieren. Eine Fahrzeugkomponente (etwa die Fahrzeugkomponente 20 und/oder die Mehrzahl von weiteren Fahrzeugkomponenten) können beispielsweise freigeschalten werden, wenn eine Überprüfung ergibt, dass sich die Fahrzeugkomponente in dem Fahrzeug befindet, für das sie vorgesehen ist.

Die Fahrzeugkomponente und/oder die Mehrzahl von weiteren Fahrzeugkomponenten können beispielsweise Komponenten des Fahrzeugs sein, die ausgebildet sind, innerhalb des Fahrzeugs mit anderen Fahrzeugkomponenten zu kommunizieren, etwa Steuergeräte, Aktoren, Sensoren, Kontrollmodule des Fahrzeugs. In einem beispielhaften Ausführungsbeispiel kann die Fahrzeugkomponente 20 beispielsweise ein Fahrzeug-zu-Fahrzeug-Kommunikationsmodul sein. Beispielsweise können die Fahrzeugkomponente 20 und/oder die Mehrzahl von weiteren Fahrzeugkomponenten ausgebildet sein, über einen Fahrzeugbus, etwa einen Kontroll-Netzwerk-Bus (auch engl. Controller Area Network Bus, CAN Bus) oder ein lokales Verbindungsnetzwerk (auch engl. Local Interconnect Network, LIN) (miteinander) zu kommunizieren.

In zumindest manchen Ausführungsbeispielen kann das Fahrzeug 100 beispielsweise einem Landfahrzeug, einem Wasserfahrzeug, einem Luftfahrzeug, einem Schienenfahrzeug, einem Straßenfahrzeug, einem Auto, einem Geländefahrzeug, einem Kraftfahrzeug, oder einem Lastkraftfahrzeug entsprechen.

Die zumindest eine Schnittstelle 12 kann beispielsweise einem oder mehreren Eingängen und/oder einem oder mehreren Ausgängen zum Empfangen und/oder Übertragen von Informationen entsprechen, etwa in digitalen Bitwerten, basierend auf einem Code, innerhalb eines Moduls, zwischen Modulen, oder zwischen Modulen verschiedener Entitäten. Die zumindest eine Schnittstelle 12 kann beispielsweise ausgebildet sein, um über den Kontroll-Netzwerk-Bus oder das lokale Verbindungsnetzwerk mit der Mehrzahl von weiteren Fahrzeugkomponenten des kommunizieren.

In zumindest manchen Ausführungsbeispielen kann die Kommunikation mit der Mehrzahl von weiteren Fahrzeugkomponenten eine einseitige Kommunikation sein. Beispielseise kann die Kommunikation (lediglich) Nachrichten umfassen, die von der Mehrzahl von weiteren Fahrzeugkomponenten übermittelt werden und von der zumindest einen Schnittstelle empfangen werden. Beispielsweise kann die zumindest eine Schnittstelle 12 ausgebildet sein, um Nachrichten, die von der Mehrzahl von weiteren Fahrzeugkomponenten über den Kontroll-Netzwerk-Bus oder über das lokale Verbindungsnetzwerk übertragen werden, zu empfangen oder mitzuhören, ohne dass diese Nachrichten explizit an die Fahrzeugkomponente 20 oder die Vorrichtung 10 adressiert sind. In zumindest manchen Ausführungsbeispielen kann die zumindest eine Schnittstelle 12 ausgebildet sein, um Nachrichten von der Mehrzahl von weiteren Fahrzeugkomponenten zu empfangen.

Alternativ kann die Kommunikation mit der Mehrzahl von weiteren Fahrzeugkomponenten eine zweiseitige Kommunikation sein. Beispielsweise kann die zumindest eine Schnittstelle 12 ausgebildet sein, um Nachrichten zu der Mehrzahl von weiteren Fahrzeugkomponenten zu übertragen und Nachrichten von der Mehrzahl von weiteren Fahrzeugkomponenten zu empfangen. Beispielsweise kann das Kontrollmodul 14 ausgebildet sein, um ein Challenge-Response-Verfahren durch Übermitteln einer Nachricht an die Mehrzahl von weiteren Fahrzeugkomponenten und Empfangen der Antwort von der Mehrzahl von weiteren Fahrzeugkomponenten durchzuführen. Die Antwort kann beispielsweise in den Nachrichten der Mehrzahl von weiteren Fahrzeugkomponenten, die zum Regelbetrieb der Fahrzeugkomponente genutzt werden, umfasst sein.

In zumindest manchen Ausführungsbeispielen umfasst die Mehrzahl von weiteren Fahrzeugkomponenten Fahrzeugkomponenten, deren Nachrichten für den Regelbetrieb der Fahrzeugkomponente 20 genutzt oder benötigt werden. Beispielsweise kann die Mehrzahl von weiteren Fahrzeugkomponenten (lediglich) Sensoren umfassen, deren Nachrichten für den Regelbetrieb der Fahrzeugkomponente 20 genutzt oder benötigt werden. Die Mehrzahl von weiteren Fahrzeugkomponenten können beispielsweise Fahrzeugkomponenten sein, die besonders schwer aus dem Fahrzeug zu entfernen sind. Beispielsweise kann die Mehrzahl von weiteren Fahrzeugkomponenten einen Antriebsmotor des Fahrzeugs 100 und/oder ein Getriebe des Fahrzeugs 100 umfassen. Alternativ oder zusätzlich kann die Mehrzahl von weiteren Fahrzeugkomponenten (lediglich) Fahrzeugkomponenten umfassen, die erst Nachrichten an die Fahrzeugkomponente 20 / die Vorrichtung 10 übermitteln, nachdem sie ihrerseits freigeschalten sind, beispielsweise basierend auf einem gesicherten Verbund von Fahrzeugkomponenten. In manchen Ausführungsbeispielen kann die Mehrzahl von weiteren Fahrzeugkomponenten zumindest drei (oder zumindest vier, zumindest fünf) Fahrzeugkomponenten des Fahrzeugs 100 umfassen. In zumindest manchen Ausführungsbeispielen kann das Kontrollmodul 14 ausgebildet sein, um die Fahrzeugkomponente 20 freizuschalten, falls die Identität aller oder einer ausreichenden Anzahl von Fahrzeugkomponenten der Mehrzahl von weiteren Fahrzeugkomponenten erfolgreich verifiziert wurde.

In Ausführungsbeispielen kann die das Kontrollmodul 14 einem beliebigen Controller oder Prozessor oder einer programmierbaren Hardwarekomponente entsprechen. Beispielsweise kann das Kontrollmodul 14 auch als Software realisiert sein, die für eine entsprechende Hardwarekomponente programmiert ist. Insofern kann das Kontrollmodul 14 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt.

Es sind beliebige Prozessoren oder auch mehrere Prozessoren zur Implementierung des Kontrollmoduls 14 denkbar.

In zumindest manchen Ausführungsbeispielen umfasst das Empfangen der Nachrichten von der Mehrzahl von weiteren Fahrzeugkomponenten ein Empfangen der Nachrichten über ein Bussystem oder über ein Peer-to-Peer-Netzwerksystem (von englisch peer "Gleichgestellter", "Ebenbürtiger"). Die Nachrichten können beispielsweise an die Fahrzeugkomponente 20 oder die Vorrichtung 10 adressiert sein. Alternativ kann das Kontrollmodul 14 ausgebildet sein, über die zumindest eine Schnittstelle 12 auf dem Fahrzeugbus mitzuhorchen und die Nachrichten zu empfangen, auch wenn diese keinen dedizierten Empfänger oder einen anderen Empfänger spezifizieren.

In zumindest manchen Ausführungsbeispielen ist die Identität einer Fahrzeugkomponente das, was die Fahrzeugkomponente gegenüber anderen Fahrzeugkomponenten unterscheidet oder ausweist, etwa eine Seriennummer, ein Identifikationszeichen oder ein (kryptografischer) Schlüssel. Die Identität einer Fahrzeugkomponente kann genutzt werden, um diese von einer weiteren Fahrzeugkomponente zu unterscheiden. Beispielsweise kann die Identität einer Fahrzeugkomponente einzigartig sein, d.h. jede Fahrzeugkomponente kann eine eigene Identität aufweisen. Beispielsweise können Fahrzeugkomponenten des gleichen Fahrzeugkomponententyps, die etwa für das gleiche Fahrzeugmodell verwendet werden können, unterschiedliche Identitäten aufweisen. In manchen Ausführungsbeispielen kann die Identität einer Fahrzeugkomponente bei der Fertigung der Fahrzeugkomponente festgelegt werden. Alternativ oder zusätzlich kann die Identität der Fahrzeugkomponente nach der Fertigung festgelegt oder geändert werden, etwa durch Vergabe einer Seriennummer, eines Identifikationszeichens oder eines (kryptografischen) Schlüssels. Wird eine Fahrzeugkomponente der Mehrzahl von weiteren Fahrzeugkomponente ausgetauscht, so kann die hinzugefügte Fahrzeugkomponente eine andere Identität aufweisen, als die Fahrzeugkomponente, die entfernt wurde. Wird eine Fahrzeugkomponente ausgetauscht, so kann entweder die hinzugefügte Fahrzeugkomponente zu den gespeicherten Identifikationsdaten hinzugefügt werden, oder die Identität der Fahrzeugkomponente, die entfernt wurde, kann auf die hinzugefügte Fahrzeugkomponente übertragen werden. In manchen Ausführungsbeispielen können (alle) Fahrzeugkomponenten der Mehrzahl von weiteren Fahrzeugkomponenten die gleiche Identität aufweisen. In diesem Fall kann die Identität einer Fahrzeugkomponente eine Zugehörigkeit der Fahrzeugkomponente zu einem (gesicherten) Verbund von Fahrzeugkomponenten oder zu einem Fahrzeug indizieren (Verbundsidentität).

Das Verifizieren einer Identität einer Fahrzeugkomponente der Mehrzahl von weiteren Fahrzeugkomponenten kann beispielsweise bestimmen, ob die Identität der Fahrzeugkomponente der Mehrzahl von weiteren Fahrzeugkomponenten dem Kontrollmodul 14 in den gespeicherten Identifikationsdaten umfasst ist. Beispielsweise können die gespeicherten Identifikationsdaten Seriennummern, Identifikationszeichen oder (kryptografische) Schlüssel für die Mehrzahl von weiteren Fahrzeugkomponenten umfassen. Beispielsweise können die gespeicherten Identifikationsdaten für jede Fahrzeugkomponente der Mehrzahl von weiteren Fahrzeugkomponenten (eigene) Identifikationsdaten umfassen. Alternativ können die gespeicherten Identifikationsdaten für (alle) Fahrzeugkomponenten der Mehrzahl von weiteren Fahrzeugkomponenten die gleichen Identifikationsdaten umfassen, etwa, falls die Identität einer Fahrzeugkomponente der Zugehörigkeit der Fahrzeugkomponente zu einem Verbund von Fahrzeugkomponenten oder zu einem Fahrzeug indiziert. Die Vorrichtung 10 kann ferner einen Speicher umfassen, ausgebildet zum Speichern der gespeicherten Identifikationsdaten. Der Speicher kann mit dem Kontrollmodul 14 gekoppelt sein. Beispielsweise kann das Kontrollmodul 14 ausgebildet sein, um die Identifikationsdaten bei einem Einbau der Vorrichtung, der Fahrzeugkomponente oder der weiteren Fahrzeugkomponente zu erhalten. Bei einem Austausch der Vorrichtung, der Fahrzeugkomponente oder der weiteren Fahrzeugkomponente können die Identifikationsdaten beispielsweise angepasst oder ausgetauscht werden.

In zumindest manchen Ausführungsbeispielen kann das Kontrollmodul 14 ausgebildet sein, um durch Verifizieren der Identität der Mehrzahl von weiteren Fahrzeugkomponenten zu überprüfen oder sicherzustellen, dass es von denjenigen Fahrzeugkomponenten Nachrichten empfängt, von denen es erwartet oder glaubt Nachrichten zu empfangen. Das Verifizieren der Identität einer Fahrzeugkomponente der Mehrzahl von weiteren Fahrzeugkomponenten kann ein Überprüfen umfassen, ob eine Nachricht, die von der Fahrzeugkomponente der Mehrzahl von weiteren Fahrzeugkomponenten empfangen wurde, indiziert, dass die Nachricht von derjenigen Fahrzeugkomponente stammt, die dem Kontrollmodul 14 durch die gespeicherten Identifikationsdaten bekannt ist. Die Verifikation der Identität einer Fahrzeugkomponente kann beispielsweise erfolgreich sein, falls die Identität der Fahrzeugkomponente mit den gespeicherten Identifikationsdaten in Einklang steht. In manchen Ausführungsbeispielen kann die Verifikation der Identität der Mehrzahl von weiteren Fahrzeugkomponenten erfolgreich sein, falls die Verifikation aller Fahrzeugkomponenten der Mehrzahl von weiteren Fahrzeugkomponenten erfolgreich ist. Alternativ kann die Verifikation der Identität der Mehrzahl von weiteren Fahrzeugkomponenten erfolgreich sein, falls die Verifikation eines ausreichend großen Anteils von Fahrzeugkomponenten der Mehrzahl von weiteren Fahrzeugkomponenten erfolgreich ist. Dabei können beispielsweise Fahrzeugkomponenten der Mehrzahl von weiteren Fahrzeugkomponenten übergangen werden, die innerhalb eines vordefinierten Zeitintervalls vor dem Freischalten der Fahrzeugkomponente 20 keine Nachricht an die Vorrichtung 10 / die Fahrzeugkomponente 20 übermittelt haben. In manchen Ausführungsbeispielen kann das Verifizieren der Identität der Mehrzahl von weiteren Fahrzeugkomponenten ein Überprüfen umfassen, ob Nachrichten von allen Fahrzeugkomponenten der Mehrzahl von weiteren Fahrzeugkomponenten empfangen wurden. Beispielsweise kann das Verifizieren der Identität erfolgreich sein, falls die Verifikation für diejenigen Fahrzeugkomponenten, von denen Nachrichten empfangen wurden, erfolgreich ist und das Kontrollmodul die Nachrichten von einer ausreichend großen Anzahl von Fahrzeugkomponenten empfangen hat. In manchen Ausführungsbeispielen kann das Kontrollmodul 14 ausgebildet sein, die Fahrzeugkomponente 20 freizuschalten, falls die Verifikation für der Identität für alle Fahrzeugkomponenten der Mehrzahl von weiteren Fahrzeugkomponenten erfolgreich ist. Alternativ kann das Kontrollmodul 14 ausgebildet sein, die Fahrzeugkomponente 20 freizuschalten, falls die Verifikation eines ausreichend großen Anteils von Fahrzeugkomponenten der Mehrzahl von weiteren Fahrzeugkomponenten erfolgreich ist.

Das Kontrollmodul 14 kann beispielsweise ausgebildet sein, um die Identität der Mehrzahl von weiteren Fahrzeugkomponenten aus den empfangenen Nachrichten abzuleiten. Das Kontrollmodul 14 kann ferner ausgebildet sein, um die abgeleitete Identität der Mehrzahl von weiteren Fahrzeugkomponenten mit den gespeicherten Identifikationsdaten zu vergleichen. Stehen die abgeleiteten Identifikationsdaten mit den gespeicherten Identifikationsdaten im Einklang, so kann die Verifikation der Identität der Mehrzahl von weiteren Fahrzeugkomponenten erfolgreich sein. Eine (abgeleitete) Identität kann mit den gespeicherten Identifikationsdaten im Einklang stehen, falls sich aus den gespeicherten Identifikationsdaten eine Übereinstimmung mit der Identität ergibt, d.h. beispielsweise basierend auf einem Vergleich von Zeichenketten, oder durch Berechnen eines Wertes aus der Identität und/oder den gespeicherten Identitätsdaten. Eine (abgeleitete) Identität kann beispielsweise mit den gespeicherten Identifikationsdaten im Einklang stehen, falls die Identität in den gespeicherten Identifikationsdaten umfasst ist, etwa als Seriennummer, Identifikationskennzeichen oder (kryptografische) Signatur. Alternativ oder zusätzlich kann eine (abgeleitete) Identität beispielsweise mit den gespeicherten Identifikationsdaten im Einklang stehen, falls die (abgeleitete) Identität und die gespeicherten Identifikationsdaten durch eine mathematische Funktion verknüpft werden können, die ergibt, ob die Identität und die gespeicherten Identifikationsdaten im Einklang stehen.

Beispielsweise kann das Kontrollmodul 14 ausgebildet sein, um die Identität der Mehrzahl von weiteren Fahrzeugkomponenten basierend auf kryptografisch geschützten Nachrichten der Mehrzahl von weiteren Fahrzeugkomponenten zu verifizieren. Die von der Mehrzahl von weiteren Fahrzeugkomponenten empfangenen Nachrichten können beispielsweise kryptografisch geschützte Nachrichten sein und/oder einen basierend auf einem kryptografischen Schlüssel berechneten Wert umfassen.

In manchen Ausführungsbeispielen können das Kontrollmodul 14 und die Mehrzahl von weiteren Fahrzeugkomponenten ein gemeinsames Geheimnis, beispielsweise einen gemeinsamen kryptografischen Schlüssel, umfassen, etwa separat für jede Fahrzeugkomponente der Mehrzahl von weiteren Fahrzeugkomponenten oder ein gemeinsames Geheimnis für alle Fahrzeugkomponenten der Mehrzahl von weiteren Fahrzeugkomponenten. Das gemeinsame Geheimnis kann beispielsweise bei der Fertigung des Fahrzeugs oder bei dem Einbau einer Fahrzeugkomponente durch eine Fachwerkstatt eingestellt werden. Das Kontrollmodul 14 kann ausgebildet sein, um einen von der Mehrzahl von weiteren Fahrzeugkomponenten basierend auf einer Zufallszahl oder einer zufälligen Zeichenfolge und basierend auf dem gemeinsamen Geheimnis berechneten Wert (etwa für jede Fahrzeugkomponente separat) umfasst in den Nachrichten von der Mehrzahl von weiteren Fahrzeugkomponenten zu empfangen. Jede Fahrzeugkomponente der Mehrzahl von weiteren Fahrzeugkomponenten kann den Wert beispielsweise separat berechnen und das Kontrollmodul 14 kann ausgebildet sein, um die Werte separat von den Fahrzeugkomponenten der Mehrzahl von weiteren Fahrzeugkomponenten zu empfangen. In manchen Ausführungsbeispielen kann das Kontrollmodul 14 ausgebildet sein, um die Zufallszahl oder die zufällige Zeichenfolge als Teil der Nachrichten von der Mehrzahl von weiteren Fahrzeugkomponenten zu empfangen. Dabei kann die Zufallszahl beispielsweise von einer dritten ("vertrauenswürdigen") Instanz für die weiteren Fahrzeugkomponenten und/oder Fahrzeugkomponente 20 bereitgestellt werden. Alternativ kann das Kontrollmodul 14 ausgebildet sein, um der Mehrzahl von weiteren Fahrzeugkomponenten die Zufallszahl oder die zufällige Zeichenfolge bereitzustellen und als Antwort die berechneten Werte umfasst in die Nachrichten, die für den Regelbetrieb der Fahrzeugkomponente 20 genutzt werden, zu empfangen. Alternativ oder zusätzlich kann das Kontrollmodul 14 ausgebildet sein, um die Zufallszahl oder die zufällige Zeichenfolge von einem Seed-Wert (engl. für Ausgangs-Wert) abzuleiten. Der Seed-Wert kann beispielsweise basierend auf einem Zeitwert berechnet werden (der beispielsweise von der vertrauenswürdigen dritten Instanz bereitgestellt werden kann), und gibt den Ausgangspunkt für die Berechnung der Zufallszahl oder des zufälligen Werts an.

Beispielsweise kann jede Fahrzeugkomponente der Mehrzahl von weiteren Fahrzeugkomponenten eine eigene Zufallszahl oder eine eigene zufällige Zeichenfolge berechnen und der Vorrichtung 10 bereitstellen. Das Kontrollmodul 14 kann ausgebildet sein, um den Wert (oder die Werte) selbst basierend auf der Zufallszahl oder der zufälligen Zeichenfolge und basierend auf dem gemeinsamen Geheimnis zu berechnen und den selbst berechneten Wert mit den von der Mehrzahl von weiteren Fahrzeugkomponenten empfangenen Werten zu vergleichen um die Identität der Mehrzahl von weiteren Fahrzeugkomponenten zu verifizieren.

Alternativ oder zusätzlich können die kryptografisch geschützten Nachrichten kryptografisch signiert sein. Alternativ oder zusätzlich können die kryptografisch geschützten Nachrichten kryptografisch verschlüsselt sein. Beispielsweise kann das Kontrollmodul 14 ausgebildet sein, um eine Signatur (oder Signaturen) der empfangenen Nachrichten zu Prüfen und/oder um die empfangenen Nachrichten zu entschlüsseln um die Identität der Mehrzahl von weiteren Fahrzeugkomponenten zu verifizieren. Entspricht die Signatur (oder entsprechen die Signaturen) oder die Verschlüsselung der empfangenen Nachrichten den gespeicherten Identifikationsdaten, so kann die Verifizierung der Identität der Mehrzahl von weiteren Fahrzeugkomponenten erfolgreich sein. Die gespeicherten Identifikationsdaten der Mehrzahl von weiteren Fahrzeugkomponenten können beispielsweise kryptografische Informationen über die Mehrzahl von weiteren Fahrzeugkomponenten umfassen, etwas Information über zumindest einen von der Mehrzahl von weiteren Fahrzeugkomponenten verwendeten Schlüssel. Die Verifikation der Identität der Mehrzahl von weiteren Fahrzeugkomponenten kann beispielsweise erfolgreich sein, falls die kryptografisch geschützten Nachrichten (aller Fahrzeugkomponenten) der Mehrzahl von weiteren Fahrzeugkomponenten in Einklang stehen mit den gespeicherten kryptografischen Informationen. Beispielsweise kann die Verifikation der Identität der Mehrzahl von weiteren Fahrzeugkomponenten erfolgreich sein, falls ein Anteil von innerhalb eines vordefinierten Zeitintervalls empfangenen kryptografisch geschützten Nachrichten der Mehrzahl von weiteren Fahrzeugkomponenten, die im Einklang stehen mit den gespeicherten kryptografischen Informationen, höher ist als ein Konfidenzschwellenwert. Beispielsweise kann das Kontrollmodul 14 ausgebildet sein, um eine Signatur oder eine Verschlüsselung mit den kryptografischen Informationen zu vergleichen, um zu bestimmen, ob die Signatur oder die Verschlüsselung kompatibel ist mit den kryptografischen Informationen. Ist sie kompatibel, so kann das Kontrollmodul 14 die Identität einer (oder mehrerer/aller) Fahrzeugkomponenten beispielsweise erfolgreich verifizieren. Alternativ oder zusätzlich kann das Kontrollmodul 14 ausgebildet sein, um basierend auf den kryptografischen Informationen einen Wert zu berechnen, und den Wert mit zumindest einem von der Mehrzahl von weiteren Fahrzeugkomponenten empfangenen Wert zu vergleichen. Stimmen die Werte überein, so kann das Kontrollmodul 14 eine (oder alle) Fahrzeugkomponente der Mehrzahl von weiteren Fahrzeugkomponenten beispielsweise erfolgreich verifizieren.

In manchen Ausführungsbeispielen kann das Kontrollmodul 14 ausgebildet sein, um die Identität der Mehrzahl von weiteren Fahrzeugkomponenten durch eine Plausibilitätsprüfung eines Inhalts der empfangenen Nachrichten zu verifizieren. Beispielsweise kann das Kontrollmodul 14 ausgebildet sein, um zu prüfen, ob die empfangenen Nachrichten einen Inhalt aufweisen, der innerhalb eines zu erwartenden Rahmens liegt, oder ob die empfangenen Nachrichten einen Inhalt aufweisen, der sich lediglich innerhalb eines Toleranzbereichs von dem Inhalt vorher von der Mehrzahl von weiteren Fahrzeugkomponenten empfangener Nachrichten unterscheidet, beispielsweise basierend auf einer Nummerierung von Nachrichten. Das Kontrollmodul 14 kann ausgebildet sein, um sicherzustellen, dass alle Daten, die durch die Nachrichten, auch vorhanden und plausibel sind. Dabei kann die Plausibilisierung so implementiert werden, dass sie sich nicht mit geringfügigem Aufwand umgehen bzw. fälschen lässt.

In zumindest manchen Ausführungsbeispielen können Nachrichten, die zum Regelbetrieb der Fahrzeugkomponente 20 genutzt werden, Nachrichten sein, die von der Fahrzeugkomponente 20 nach einer Initialisierung der Fahrzeugkomponente genutzt werden. Der Regelbetrieb der Fahrzeugkomponente 20 kann beispielsweise ein Zustand sein, in dem die Fahrzeugkomponente vollständig funktionsfähig ist. In zumindest manchen Ausführungsbeispielen umfasst das Freischalten der Fahrzeugkomponente das Aktivieren oder Starten eines Regelbetriebs der Fahrzeugkomponente. Beispielsweise kann das Kontrollmodul 14 ausgebildet sein, um einen Zustand der Fahrzeugkomponente 20 auf "Regelbetrieb" zu ändern. Die Fahrzeugkomponente 20 kann den Regelbetrieb beispielsweise einnehmen, nachdem eine Initialisierung, die die Freischaltung der Fahrzeugkomponente umfassen kann, der Fahrzeugkomponente stattgefunden hat. Beispielsweise können die Nachrichten, die zum Regelbetrieb der Fahrzeugkomponente 20 genutzt werden, Sensordaten der Mehrzahl von weiteren Fahrzeugkomponenten umfassen, die von der Fahrzeugkomponente 20 verarbeitet oder weitergeleitet werden. Beispielsweise können die Nachrichten, auf der die Freischaltung der Fahrzeugkomponente 20 basiert, Nachrichten sein, die zum Regelbetrieb der Mehrzahl von weiteren Fahrzeugkomponenten genutzt werden und/oder von diesen (beispielsweise periodisch) versendet werden. Beispielsweise können die Nachrichten, auf denen die Verifizierung der Identität der Mehrzahl von weiteren Fahrzeugkomponenten basiert, Nachrichten sein, die nicht ausschließlich zum Zweck der Verifizierung der Identität der Mehrzahl von weiteren Fahrzeugkomponenten über die zumindest eine Schnittstelle 12 empfangen werden. Beispielsweise können die Nachrichten, auf denen die Verifizierung der Identität der Mehrzahl von weiteren Fahrzeugkomponenten basiert, passiv von der Vorrichtung 10, d.h. ohne Aufforderung der Vorrichtung 10 zum Übermitteln der Nachrichten von der Mehrzahl von weiteren Fahrzeugkomponenten empfangen werden. Beispielsweise können die Nachrichten, auf denen die Verifizierung der Identität der Mehrzahl von weiteren Fahrzeugkomponenten basiert, Nutzdaten für den Regelbetrieb der Fahrzeugkomponente umfassen. Die Nachrichten, auf denen die Freischaltung der Fahrzeugkomponente 20 basiert, können Nachrichten sein, die nicht ausschließlich zum Zweck der Freischaltung der Fahrzeugkomponente von der Mehrzahl von weiteren Fahrzeugkomponenten gesendet werden.

In manchen Ausführungsbeispielen kann zumindest eine Fahrzeugkomponente der Mehrzahl von weiteren Fahrzeugkomponenten Teil eines gesicherten Verbunds von Fahrzeugkomponenten des Fahrzeugs 100 sein. In zumindest manchen Ausführungsbeispielen kann der gesicherte Verbund von Fahrzeugkomponenten eine Mehrzahl von Fahrzeugkomponenten umfassen, die gegenseitig so verknüpft sind, dass ein Kompromittieren einer Fahrzeugkomponente der Mehrzahl von Fahrzeugkomponenten ein Freischalten der anderen Fahrzeugkomponenten der Mehrzahl von Fahrzeugkomponenten des gesicherten Verbunds verhindert. Beispielsweise können die Fahrzeugkomponenten des gesicherten Verbunds gegenseitig sicherstellen, dass keine Fahrzeugkomponente des gesicherten Verbunds kompromittiert wurde oder kompromittiert ist. In manchen Ausführungsbeispielen kann die Mehrzahl von weiteren Fahrzeugkomponenten den gesicherten Verbund bilden. Der gesicherte Verbund kann beispielsweise alle Fahrzeugkomponenten der Mehrzahl von weiteren Fahrzeugkomponenten umfassen. Das Kontrollmodul 14 kann beispielsweise ausgebildet sein, um die Fahrzeugkomponente 20 freizuschalten, falls die Nachrichten implizieren, dass die Mehrzahl von weiteren Fahrzeugkomponenten freigeschalten ist. Der Empfang von Nachrichten von der Mehrzahl von weiteren Fahrzeugkomponenten (die Teil des gesicherten Verbunds sein können) kann beispielsweise implizieren, dass die Mehrzahl von weiteren Fahrzeugkomponenten freigeschalten sind.

In einem beispielhaften Ausführungsbeispiel kann die Fahrzeugkomponente 20 ein Fahrzeug-zu-Fahrzeug-Kommunikationsmodul sein. Die empfangenen Nachrichten, auf denen die Verifizierung der Identität der Mehrzahl von weiteren Fahrzeugkomponenten basiert, können zumindest ein Element der Gruppe von Positionsdaten eines Navigationssatellitensystems zur Positionsbestimmung des Fahrzeugs 100, Lenkwinkelinformation des Fahrzeugs 100 und Geschwindigkeitsinformation des Fahrzeugs 100 umfassen. Eine Fahrzeug-zu-Fahrzeug-Kommunikation des Fahrzeug-zu-Fahrzeug-Kommunikationsmoduls kann auf der Freischaltung des Fahrzeug-zu-Fahrzeug-Kommunikationsmoduls basieren. Fig. 1a zeigt ferner das Fahrzeug-zu-Fahrzeug-Kommunikationsmodul 20 mit der Vorrichtung 10 gemäß einem der vorhergehenden Ausführungsbeispiele. Beispielsweise kann das Fahrzeug-zu-Fahrzeug-Kommunikationsmodul ausgebildet sein, erst über Fahrzeug-zu-Fahrzeug-Kommunikation zu kommunizieren, wenn das Fahrzeug-zu-Fahrzeug-Kommunikation freigeschalten ist. Gehört etwa ein Ortungsmodul zu Mehrzahl von weiteren Fahrzeugkomponenten, so kann die zumindest eine Nachricht Positionsdaten des Ortungsmodul verwenden - sendet das Navigationssatellitensystems Daten, so kann dadurch eine Freischaltung des Navigationssatellitensystems durch die zumindest eine Nachricht die Freischaltung des Fahrzeug-zu-Fahrzeug-Kommunikationsmoduls auslösen (zusammen mit Nachrichten der anderen Fahrzeugkomponenten der Mehrzahl von weiteren Fahrzeugkomponenten).

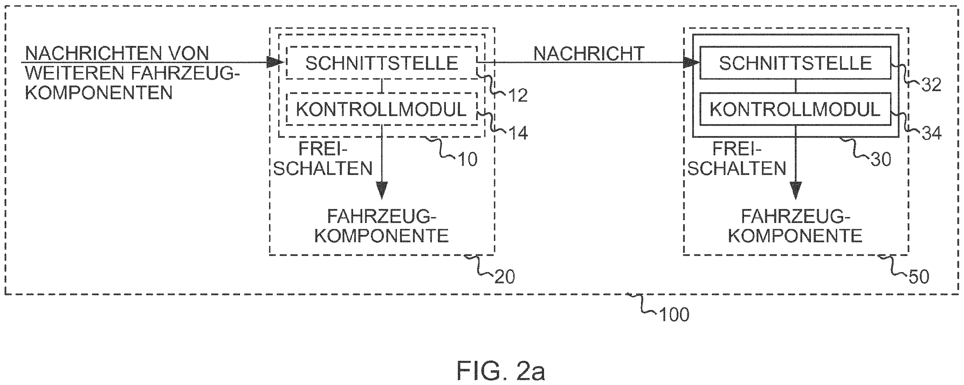

Fig. 2a zeigt ein Blockdiagramm einer Vorrichtung 30 zum Freischalten einer ersten Fahrzeugkomponente 50 eines Fahrzeugs 100. Die Vorrichtung 30 umfasst zumindest eine Schnittstelle 32, ausgebildet zur Kommunikation mit einer zweiten Fahrzeugkomponente 20 des Fahrzeugs 100. Die zweite Fahrzeugkomponente 20 wird durch eine Vorrichtung 10, wie sie im Zusammenhang mit Fig. 1 eingeführt wird, freigeschalten. Beispielsweise kann die zweite Fahrzeugkomponente 20 der Fahrzeugkomponente 20 der Fign. 1a und/oder 1b entsprechen. Die erste Fahrzeugkomponente kann ähnlich implementiert sein wie die Fahrzeugkomponente 20 oder wie eine Fahrzeugkomponente der Mehrzahl von weiteren Fahrzeugkomponenten von Fig. 1a. Die Vorrichtung 30 umfasst ferner ein Kontrollmodul 34, ausgebildet zum Steuern der zumindest einen Schnittstelle 32. Die zumindest eine Schnittstelle 32 kann beispielsweise ähnlich implementiert sein wie die Schnittstelle 12 von Fig. 1a. Das Kontrollmodul 34 kann ähnlich implementiert sein wie das Kontrollmodul 14 von Fig. 1a. Das Kontrollmodul 34 ist ferner ausgebildet zum Empfangen zumindest einer Nachricht von der zweiten Fahrzeugkomponente 20 über die zumindest eine Schnittstelle 32. Das Kontrollmodul 34 ist ferner ausgebildet zum Legitimieren der zweiten Fahrzeugkomponente 20 basierend auf der zumindest einen von der zweiten Fahrzeugkomponente 20 empfangenen Nachricht. Das Kontrollmodul 34 ist ferner ausgebildet zum Freischalten der ersten Fahrzeugkomponente 50, falls die zumindest eine empfangene Nachricht impliziert, dass die zweite Fahrzeugkomponente 20 durch die Vorrichtung 10 freigeschalten wurde und falls die Legitimierung der zweiten Fahrzeugkomponente erfolgreich ist.

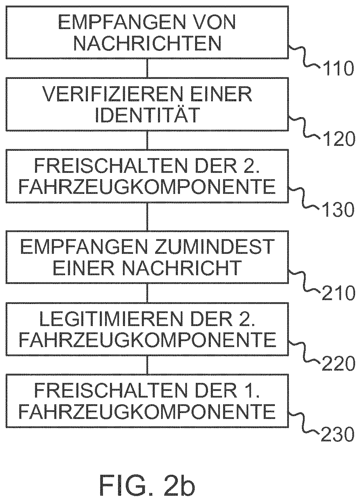

Fig. 2b zeigt ein Flussdiagramm eines entsprechenden Verfahrens zum Freischalten der ersten Fahrzeugkomponente 50 und der zweiten Fahrzeugkomponente 20 des Fahrzeugs 100. Das Verfahren umfasst Empfangen 110, durch die zweite Fahrzeugkomponente 20 des Fahrzeugs 100, von Nachrichten der Mehrzahl von weiteren Fahrzeugkomponenten des Fahrzeugs 100. Das Verfahren umfasst ferner Verifizieren 120, durch die zweite Fahrzeugkomponente 20, der Identität der Mehrzahl von weiteren Fahrzeugkomponenten basierend auf den empfangenen Nachrichten und basierend auf gespeicherten Identifikationsdaten der Mehrzahl von weiteren Fahrzeugkomponenten. Die Nachrichten, auf denen die Verifizierung der Identität der Mehrzahl von weiteren Fahrzeugkomponenten basiert, sind Nachrichten, die zum Regelbetrieb der zweiten Fahrzeugkomponente 20 genutzt werden. Das Verfahren umfasst ferner Freischalten 130 der zweiten Fahrzeugkomponente 20 (durch die zweite Fahrzeugkomponente 20), falls die Identität der Mehrzahl von weiteren Fahrzeugkomponenten in Einklang steht mit den gespeicherten Identifikationsdaten der Mehrzahl von weiteren Fahrzeugkomponenten. Das Verfahren umfasst ferner Empfangen 210, durch die erste Fahrzeugkomponente 50, zumindest einer Nachricht von der zweiten Fahrzeugkomponente 20. Das Verfahren umfasst ferner Legitimieren 220, durch die erste Fahrzeugkomponente 50, der zweiten Fahrzeugkomponente 20 basierend auf der zumindest einen von der zweiten Fahrzeugkomponente empfangenen Nachricht. Das Verfahren umfasst ferner Freischalten 230 der ersten Fahrzeugkomponente 50 (durch die erste Fahrzeugkomponente 50), falls die zumindest eine empfangene Nachricht impliziert, dass die zweite Fahrzeugkomponente 20 freigeschalten wurde und falls die Legitimierung der zweiten Fahrzeugkomponente 20 erfolgreich ist. Die folgende Beschreibung bezieht sich sowohl auf die Vorrichtung 30 von Fig. 2a als auch auf das Verfahren von Fig. 2b.

In zumindest einigen Ausführungsbeispielen kann die Kommunikation mit der zweiten Fahrzeugkomponente 20 eine zweiseitige Kommunikation sein. Beispielsweise kann die zumindest eine Schnittstelle 32 ausgebildet sein, um Nachrichten zu der zweiten Fahrzeugkomponente zu übertragen und Nachrichten von der zweiten Fahrzeugkomponente zu empfangen. Beispielsweise kann das Kontrollmodul 34 ausgebildet sein, um ein Challenge-Response-Verfahren durch Übermitteln einer Nachricht an die zweite Fahrzeugkomponente und Empfangen der Antwort von der zweiten Fahrzeugkomponente durchzuführen.

Alternativ kann die Kommunikation mit der zweiten Fahrzeugkomponente 20 eine einseitige Kommunikation sein. Beispielseise kann die Kommunikation (lediglich) Nachrichten umfassen, die von der zweiten Fahrzeugkomponente übermittelt werden und von der zumindest einen Schnittstelle empfangen werden. Beispielsweise kann die zumindest eine Schnittstelle 32 ausgebildet sein, um Nachrichten, die von der zweiten Fahrzeugkomponente über den Kontroll-Netzwerk-Bus oder über das lokale Verbindungsnetzwerk übertragen werden zu Empfangen oder mitzuhören, ohne dass diese Nachrichten explizit an die erste Fahrzeugkomponente 50 oder die Vorrichtung 30 adressiert sind. In zumindest manchen Ausführungsbeispielen kann die zumindest eine Schnittstelle 32 ausgebildet sein, um Nachrichten von der zweiten Fahrzeugkomponente zu empfangen.

In zumindest manchen Ausführungsbeispielen umfasst das Empfangen der zumindest einen Nachricht von der zweiten Fahrzeugkomponente ein Empfangen der zumindest einen Nachricht über ein Bussystem oder über ein Peer-to-Peer-Netzwerksystem (von englisch peer "Gleichgestellter", "Ebenbürtiger"). Die zumindest eine Nachricht kann beispielsweise an die erste Fahrzeugkomponente 50 oder die Vorrichtung 30 adressiert sein. Alternativ kann das Kontrollmodul 34 ausgebildet sein, über die zumindest eine Schnittstelle 32 auf dem Fahrzeugbus mitzuhorchen und die zumindest eine Nachricht zu empfangen, auch wenn diese keinen dedizierten Empfänger oder einen anderen Empfänger spezifiziert. Beispielsweise kann die zumindest eine Nachricht, auf der die Freischaltung der ersten Fahrzeugkomponente 50 basiert, zumindest eine Nachricht sein, die zum Regelbetrieb der ersten Fahrzeugkomponente 50 oder zum Regelbetrieb der zweiten Fahrzeugkomponente 20 genutzt wird. In anderen Worten kann die zumindest eine Nachricht, auf der die Freischaltung der ersten Fahrzeugkomponente 50 basiert, zumindest eine Nachricht sein, die nicht ausschließlich zum Zweck der Freischaltung der Fahrzeugkomponente 50 über die zumindest eine Schnittstelle 32 empfangen wird oder die nicht ausschließlich zum Zweck der Freischaltung der ersten Fahrzeugkomponente von der zweiten Fahrzeugkomponente 20 gesendet wird. In manchen Ausführungsbeispielen kann das Kontrollmodul 34 ausgebildet sein, um die zumindest eine Nachricht als Antwort auf eine Anfrage/Aufforderung an das zweite Kommunikationsmodul zu empfangen, beispielsweise als Teil eines Aufforderung-Antwort-Authentifizierungsverfahrens.

In zumindest einigen Ausführungsbeispielen bedeutet oder impliziert eine erfolgreiche Legitimierung der zweiten Fahrzeugkomponente 20 durch das Kontrollmodul 34, dass das Kontrollmodul 34 der zweiten Fahrzeugkomponente 20 vertraut. Die erfolgreiche Legitimierung 20 kann bedeuten oder implizieren, dass das Kontrollmodul 34 ausreichend sicher ist, dass die zweite Fahrzeugkomponente 20 durch die Vorrichtung 10 freigeschalten wird. Durch die Legitimierung der zweiten Fahrzeugkomponente 20 kann das Kontrollmodul 34 überprüfen, ob es sich bei der zumindest einen Nachricht, die es empfängt, um eine Nachricht der zweiten Fahrzeugkomponente 20 handelt, die durch die Vorrichtung 10 freigeschalten wird. Das Legitimieren der zweiten Fahrzeugkomponente 20 kann beispielsweise ein Feststellen und/oder identifizieren einen Identität der zweiten Fahrzeugkomponente 20 und/oder ein Überprüfen einer Freigabe der zweiten Fahrzeugkomponente durch die Vorrichtung 10 umfassen.

Das Kontrollmodul 34 kann beispielsweise ausgebildet sein, um basierend auf der zumindest einen von der zweiten Fahrzeugkomponente 20 empfangenen Nachricht auf die Legitimität der zweiten Fahrzeugkomponente 20 zu schließen. In manchen Ausführungsbeispielen kann das Kontrollmodul 34 ausgebildet sein, um lediglich basierend auf einer (einzigen) empfangenen Nachricht die Legitimität der zweiten Fahrzeugkomponente zu bestimmen. In manchen Beispielen kann das Kontrollmodul 34 ausgebildet sein, vor dem Empfang der zumindest einen Nachricht, auf der die Legitimierung der zweiten Fahrzeugkomponente basiert, keine Nachrichten an die zweite Fahrzeugkomponente zu übermitteln. Alternativ kann die zumindest eine Nachricht eine Antwort sein auf eine Anfrage oder Aufforderung, die das Kontrollmodul 34 der zweiten Fahrzeugkomponente 20 übermittelt.

Beispielsweise kann das Kontrollmodul 34 ausgebildet sein, um die zweite Fahrzeugkomponente 20 basierend auf einem Aufforderung-Antwort-Authentifizierungsverfahren (auch engl. Challenge-Response) zu legitimieren. Beispielsweise kann das Kontrollmodul 34 ausgebildet sein, um der zweiten Fahrzeugkomponente eine Aufforderung oder Anfrage (des Aufforderung-Antwort-Authentifizierungsverfahrens) zu übermitteln, und die zumindest eine Nachricht der zweiten Fahrzeugkomponente 20 kann die Antwort auf die Aufforderung oder Anfrage sein. In manchen Ausführungsbeispielen können das Kontrollmodul 34 und die zweite Fahrzeugkomponente 20 ein gemeinsames Geheimnis, beispielsweise einen gemeinsamen kryptografischen Schlüssel umfassen. Das Kontrollmodul 34 kann ausgebildet sein, um die zweite Fahrzeugkomponente aufzufordern, einen Wert basierend auf einer Zufallszahl oder einer zufällige Zeichenfolge und basierend auf dem gemeinsamen Geheimnis zu berechnen. Das Kontrollmodul 34 kann ausgebildet sein, um die Zufallszahl oder die zufällige Zeichenfolge der zweiten Fahrzeugkomponente 20 zu übermitteln, etwa zusammen mit der Aufforderung. Das Kontrollmodul 34 kann ausgebildet sein, um den von der zweiten Fahrzeugkomponente 20 berechneten Wert umfasst in der zumindest einen Nachricht von der zweiten Fahrzeugkomponente zu empfangen. Das Kontrollmodul 34 kann ausgebildet sein, um den Wert basierend auf der Zufallszahl oder der zufälligen Zeichenfolge und basierend auf dem gemeinsamen Geheimnis selbst zu berechnen und den selbst berechneten Wert mit dem von der zweiten Fahrzeugkomponente 20 berechneten Wert zu vergleichen um die zweite Fahrzeugkomponente zu legitimieren. Beispielsweise kann das Kontrollmodul 34 für jede weitere zu legitimierende Fahrzeugkomponente ein gemeinsames Geheimnis umfassen. Alternativ kann das gemeinsame Geheimnis das gleiche sein für alle Fahrzeugkomponenten eines Fahrzeugs. Das gemeinsame Geheimnis kann beispielsweise bei der Fertigung des Fahrzeugs oder bei dem Einbau einer Fahrzeugkomponente durch eine Fachwerkstatt eingestellt werden.

Alternativ oder zusätzlich können die kryptografisch geschützten Nachrichten einen basierend auf einem kryptografischen Schlüssel berechneten Wert umfassen (der ähnlich implementiert sein kann wie in einem Aufforderung-Antwort-Authentifizierungsverfahren). In zumindest manchen Ausführungsbeispielen umfassen das Kontrollmodul 34 und die zweite Fahrzeugkomponente 20 ein gemeinsames Geheimnis in Form eines kryptografischen Schlüssels. In manchen Ausführungsbeispielen können alle oder ein Verbund von Fahrzeugkomponenten eines Fahrzeugs den gleichen Schlüssel umfassen. Das Kontrollmodul 34 kann ausgebildet sein, um einen basierend auf dem kryptografischen Schlüssel und einer Zufallszahl oder einer zufälligen Zeichenfolge berechneten Wert von der zweiten Fahrzeugkomponente 20 zu empfangen. In manchen Ausführungsbeispielen kann das Kontrollmodul 34 ausgebildet sein, um die Zufallszahl oder die zufällige Zeichenfolge als Teil der zumindest einen Nachricht von der zweiten Fahrzeugkomponente 20 zu empfangen. Alternativ oder zusätzlich kann das Kontrollmodul 34 ausgebildet sein, um die Zufallszahl oder die zufällige Zeichenfolge von einem Seed-Wert abzuleiten. Das Kontrollmodul 34 kann ausgebildet sein, um den von der zweiten Fahrzeugkomponente 20 empfangen Wert mit einem selbst berechneten Wert zu vergleichen um die zweite Fahrzeugkomponente 20 zu legitimieren.

In zumindest manchen Ausführungsbeispielen kann das Kontrollmodul 34 ausgebildet sein, um die zweite Fahrzeugkomponente 20 basierend auf kryptografisch geschützten Nachrichten der zweiten Fahrzeugkomponente 20 zu legitimieren. Beispielsweise können die kryptografisch geschützten Nachrichten kryptografisch signiert sein. Alternativ oder zusätzlich können die kryptografisch geschützten Nachrichten kryptografisch verschlüsselt sein. Beispielsweise kann das Kontrollmodul 34 ausgebildet sein, um eine Signatur der zumindest einen empfangenen Nachricht zu Prüfen und/oder um die zumindest eine empfangene Nachricht zu entschlüsseln um die zweite Fahrzeugkomponente 20 zu legitimieren. Entspricht die Signatur oder die Verschlüsselung der zumindest einen empfangenen Nachricht einer Erwartung des Kontrollmoduls 34, so kann die Legitimierung der zweiten Fahrzeugkomponente erfolgreich sein.

In zumindest manchen Ausführungsbeispielen kann das Kontrollmodul 34 ausgebildet sein, um kryptografische Informationen über zuvor empfangene kryptografisch geschützte Nachrichten der zweiten Fahrzeugkomponente 20 zu speichern. Alternativ kann das Kontrollmodul 34 ausgebildet sein, um die kryptografischen Information bei der Fertigung des Fahrzeugs oder bei einem Austausch der ersten Fahrzeugkomponente oder der zweiten Fahrzeugkomponente zu erhalten. Die kryptografischen Informationen können beispielsweise Information über einen von der zweiten Fahrzeugkomponente 20 verwendeten Schlüssel umfassen. Das Kontrollmodul 34 kann ausgebildet sein, um die zweite Fahrzeugkomponente 20 zu legitimieren, falls kryptografisch geschützte Nachrichten, die innerhalb eines vordefinierten Zeitintervalls vor dem Freischalten der Fahrzeugkomponente über die zumindest eine Schnittstelle 32 empfangen wurden, im Einklang stehen mit den gespeicherten kryptografischen Informationen. Beispielsweise kann das Kontrollmodul 34 ausgebildet sein, um eine Signatur oder eine Verschlüsselung mit den kryptografischen Informationen zu vergleichen, um zu bestimmen, ob die Signatur oder die Verschlüsselung kompatibel ist mit den kryptografischen Informationen. Ist sie kompatibel, so kann das Kontrollmodul 34 die zweite Fahrzeugkomponente beispielsweise erfolgreich legitimieren. Alternativ oder zusätzlich kann das Kontrollmodul 34 ausgebildet sein, um basierend auf den kryptografischen Informationen einen Wert zu berechnen, und den Wert mit einem von der zweiten Fahrzeugkomponente empfangenen Wert zu vergleichen. Stimmen die Werte überein, so kann das Kontrollmodul 34 die zweite Fahrzeugkomponente beispielsweise erfolgreich legitimieren.

Alternativ oder zusätzlich kann das Kontrollmodul 34 ausgebildet sein, um die zweite Fahrzeugkomponente 20 durch eine Plausibilitätsprüfung eines Inhalts der zumindest einen Nachricht zu legitimieren. Beispielsweise kann das Kontrollmodul 34 ausgebildet sein, um zu prüfen, ob die von der zweiten Fahrzeugkomponente empfangenen Nachrichten einen Inhalt aufweisen, der innerhalb eines zu erwartenden Rahmens liegt, oder ob die von der zweiten Fahrzeugkomponente empfangenen Nachrichten einen Inhalt aufweisen, der sich lediglich innerhalb eines Toleranzbereichs von dem Inhalt vorher von der Fahrzeugkomponente 20 empfangener Nachrichten unterscheidet, beispielsweise basierend auf einer Nummerierung von Nachrichten. Das Kontrollmodul 34 kann ausgebildet sein, um sicherzustellen, dass alle Daten, die durch die zumindest eine Nachricht vorliegen sollten, auch vorhanden und plausibel sind. Dabei kann die Plausibilisierung so implementiert werden, dass sie sich nicht mit geringfügigem Aufwand umgehen bzw. fälschen lässt.

In zumindest manchen Ausführungsbeispielen umfasst das Freischalten der ersten Fahrzeugkomponente das Aktivieren oder Starten eines Regelbetriebs der ersten Fahrzeugkomponente. Beispielsweise kann das Kontrollmodul 34 ausgebildet sein, um einen Zustand der ersten Fahrzeugkomponente 50 auf "Regelbetrieb" zu ändern. Der Regelbetrieb der ersten Fahrzeugkomponente kann beispielsweise ein Zustand sein, in dem die erste Fahrzeugkomponente vollständig funktionsfähig ist. Die erste Fahrzeugkomponente kann den Regelbetrieb beispielsweise einnehmen, nachdem eine Initialisierung, die die Freischaltung der ersten Fahrzeugkomponente umfassen kann, der ersten Fahrzeugkomponente stattgefunden hat.

In zumindest manchen Ausführungsbeispielen kann bereits das Empfangen der zumindest einen Nachricht von der zweiten Fahrzeugkomponente 20 implizieren, dass die zweite Fahrzeugkomponente 20 durch die Vorrichtung 10 freigeschalten wurde. Dies kann beispielsweise der Fall sein, falls die zweite Fahrzeugkomponente 20 (erst/lediglich) nach Ihrer erfolgreichen Freischaltung durch die Vorrichtung 10 die zumindest eine Nachricht an die erste Fahrzeugkomponente 50 oder die Vorrichtung 30 übermittelt. Alternativ oder zusätzlich kann die zumindest eine Nachricht implizieren, dass die zweite Fahrzeugkomponente 20 durch die Vorrichtung 10 freigeschalten wurde, falls die zumindest eine Nachricht eine vordefinierte Information umfasst, etwa eine Information darüber, dass die zweite Fahrzeugkomponente 20 einen vordefinierten Zustand aufweist oder dass durch die zweite Fahrzeugkomponente 20 eine vordefinierte Aktion ausgeführt wird. Beispielsweise kann die zumindest eine empfangene Nachricht implizieren, dass die zweite Fahrzeugkomponente 20 durch die Vorrichtung 10 freigeschalten wurde, falls die zumindest eine empfangene Nachricht impliziert, dass die zweite Fahrzeugkomponente 20 einen vordefinierten Zustand aufweist, etwa einen Regelbetriebs-Zustand oder einen freigeschaltenen Zustand. Alternativ oder zusätzlich kann die zumindest eine empfangene Nachricht implizieren, dass die zweite Fahrzeugkomponente 20 durch die Vorrichtung 10 freigeschalten wurde, falls die zumindest eine empfangene Nachricht impliziert, dass durch die zweite Fahrzeugkomponente 20 eine vordefinierte Aktion ausgeführt wird, etwa dass eine Startsequenz einer Antriebskomponente des Fahrzeugs durchgeführt wird.

In zumindest manchen Ausführungsbeispielen kann die erste Fahrzeugkomponente erst freigeschalten werden, nachdem die zweite Fahrzeugkomponente freigeschalten ist.

Mehr Details und Aspekte der Vorrichtung 30 und/oder des Verfahrens von Fig. 2b werden in Verbindung mit dem Konzept oder Beispielen genannt, die vorher (z.B. Fig. 1a und 1b) beschrieben wurden. Die Vorrichtung 30 und/oder das Verfahren von Fig. 2b können ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

Ausführungsbeispiele beziehen sich im Folgenden Beispielhaft auf ein Fahrzeug-zu-Fahrzeug-Steuergerät (auch Fahrzeug-zu-Fahrzeug-Kommunikationsmodul). Dieses kann der (zweiten) Fahrzeugkomponente 20, wie sie in Verbindung mit den Fign. 1a bis 2b eingeführt wurden entsprechen. Die folgenden Ausführungsbeispiele sind auch auf andere Fahrzeugkomponenten anwendbar, und sind nicht auf Fahrzeug-zu-Fahrzeug-Steuergeräte beschränkt. Im Allgemeinen ist das Konzept auch auf andere Systeme mit mehreren Komponenten anwendbar, etwa auf eine Zugehörigkeit (einer Recheneinheit) zu einem verteilten Verbund von Recheneinheiten.

In zumindest manchen Beispielen kann (oder muss) das Car2Car (Fahrzeug-zu-Fahrzeug)-Steuergerät im Rahmen seiner Standardfunktionalität (etwa seines Regelbetriebs) Daten von verschiedenen anderen Steuergeräten empfangen (z.B. Geschwindigkeit, Lenkwinkel, GPS Position etc.). Diese Daten können (oder sollen) authentisch, also kryptografisch manipulationsgeschützt, übertragen werden. Dies kann bereits aus anderen Gründen notwendig sein, z.B. zur Vermeidung von Sicherheitsproblemen. Die übertragenen Daten können beispielsweise der zumindest einen Nachricht oder den Nachrichten der Mehrzahl von weiteren Fahrzeugkomponenten entsprechen.

Das Car2Car-Steuergerät kann anhand der Tatsache, dass es kryptografisch geschützte Informationen im Rahmen seiner normalen Funktionskommunikation empfängt, bereits beispielsweise feststellen, dass sich weitere dem Fahrzeug zugehörige Steuergeräte im Kommunikationsverbund befinden, etwa die Mehrzahl von weiteren Steuergeräten der Fign. 1a und 1b. Beispielsweise können zumindest einige der Steuergeräte den gesicherten Verbund der Fign. 2a und 2b bilden. Ein Angreifer müsste sie alle ausgebaut und in Betrieb genommen haben, damit das Steuergerät auch außerhalb des Fahrzeugs funktionieren kann. Dieses Verfahren kann qualitativ skalierbar sein, indem zusätzliche Aktionen (bspw. Klemmenwechsel, WFS-Authentifikation, etc.) des Fahrzeugs authentisch gemeldet sein müssen. Es kann transitiv skalierbar sein, indem Ketten von Aktionen, die ihrerseits kryptographisch gesichert sind, durchgeführt werden müssen. Somit kann sich die Voraussetzung für die Entscheidung des Sendens in zumindest manchen Beispielen entsprechend den Anforderungen an das Konfidenzniveau skalieren lassen.

In zumindest manchen Ausführungsbeispielen wird keine separate Funktion zur Feststellung der Verbundszugehörigkeit benötigt, diese kann beispielsweise auf Nachrichten basieren, die das Fahrzeug-zu-Fahrzeug-Steuergerät im Regelbetrieb empfängt. Möglicher Overhead kann reduziert oder minimiert werden, da der Manipulationsschutz sich auf bereits bestehende Kommunikation beziehen kann und in manchen Ausführungsbeispielen keine extra Nachrichten ausschließlich zur Verbundauthentifikation eingeführt werden müssen. Das System skaliert in zumindest manchen Ausführungsbeispielen auf beliebig viele Steuergeräte. Von je mehr anderen Steuergeräten das Car2Car Steuergerät geschützte Funktionsdaten erhält, desto sicherer kann es sich sein, sich wirklich im Fahrzeug zu befinden. Zudem kann eine inhaltliche Skalierbarkeit durch weitere Steuergeräte und Zustände gegeben sein. Eine kryptografische Skalierbarkeit kann durch eine Nutzung von mehr Nachrichten von unterschiedlichen Sendern gegeben sein - mehr Nachrichten von unterschiedlichen Sendern müssen in manchen Ausführungsbeispielen authentifiziert werden, diese müssten gefälscht werden, um die Sicherheit (Absicherung) zu umgehen.

Zudem kann Transitivität genutzt werden. Falls andere Steuergeräte (Fahrzeugkomponenten) über andere Eigenschaften verfügen, die ihren Verbau im Fahrzeug sicherstellen, kann sich dies transitiv weiterreichen lassen. Falls beispielsweise ein Steuergerät Teil des (kryptografisch geschützten) Wegfahrsperrenverbunds ist (etwa des gesicherten Verbunds) und erst dann mit dem Senden der Funktionsdaten beginnt, sobald es seine eigene Verbundszugehörigkeit festgestellt hat (etwa basierend auf dem gesicherten Verbund freigeschalten wurde), kann diese Eigenschaft automatisch auf das Car2Car Steuergerät mit übergehen (z.B. Getriebe authentifiziert BCM (engl. Body Control Module, Karosseriekontrollmodul, ein zentrales Steuerungsmodul in Kraftfahrzeugen) und kann erst nach der Authentifizierung an das Car2Car-Steuergerät senden -> damit kann das Car2Car-Steuergerät wissen, dass das BCM auch authentisch ist, ohne selbst mit ihm geredet zu haben).

Ein Aktor, im Beispiel das Sendemodul im C2C-Steuergerät, kann seine Entscheidung zum Senden (immer) an einen zu prüfenden Freigabezustand koppeln. Dieser Zustand wird beispielsweise (nur) erreicht, wenn gewisse Authentizitätsaktionen durchgeführt wurden, also wenn kryptographisch authentisierte Nachrichten (etwa die Nachrichten oder die zumindest eine Nachricht der Fign. 1a bis 2b) im Aktor-Steuergerät authentifiziert werden können. Diese Aktionen können ausgewählt werden, um somit das Konfidenzlevel für die Freigabe zu skalieren.

Das Car2Car Steuergerät kann beispielsweise manipulationsgeschützte Daten von Steuergeräten empfangen, die besonders schwer aus dem Fahrzeug zu entfernen sind, z.B. Getriebe oder Motor. Weiterhin bieten sich Steuergeräte an, die bereits in anderen Authentifikationsverbünde eingebunden sind (etwa in den gesicherten Verbund). Außerdem kann die Anzahl der Steuergeräte möglichst hoch sein. Zudem können die kryptografischen Schlüssel innerhalb des Fahrzeugs eine ausreichende Spreizung (etwa eine hohe Hamming-Distanz) haben, so dass das Car2Car Steuergerät für jedes Datum eindeutig zuweisen kann, von welchem Steuergerät es kommt (etwa zur Legitimierung der zweiten Fahrzeugkomponente). In manchen Beispielen kann erst wenn alle diese Daten bzw. Nachrichten authentisch geprüft sind, die Freigabe für eine Aktion gegeben werden, in diesem Fall das Senden der C2C-Nachrichten.

Die Daten können, aber müssen nicht, kryptografisch geschützt werden. Das Car2Car Steuergerät kann ausgebildet sein, um sicherzustellen, dass alle Daten, die vorliegen sollten, auch vorhanden und plausibel sind. Dabei kann die Plausibilisierung so implementiert werden, dass sie sich nicht mit geringfügigem Aufwand umgehen bzw. fälschen lässt. In Falle von kryptografisch geschützten Nachrichten können die kryptografischen Schlüssel in allen Steuergeräten gleich sein, um deren initiale Verteilung zu erleichtern, wobei darauf geachtet werden kann, dass die Schlüssel nicht durch Programmierfehler exponiert werden.

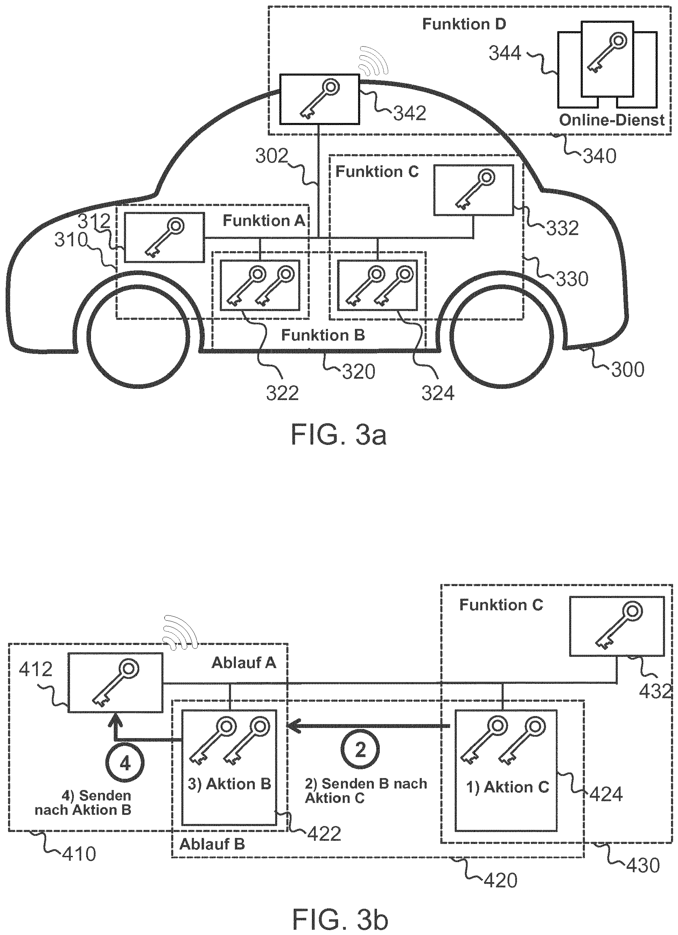

Fig. 3a zeigt ein Ausführungsbeispiel einer skalierbaren Verbundauthentifikation. Dabei werden in einem Fahrzeug 300 vier verschiedene Funktionen A 310, B 320, C 330 und D 340 ausgeführt, wobei Funktion D ein Steuergerät 342 zur Kommunikation mit einem Online-Dienst 344 umfasst. Die Funktionen A-D werden jeweils durch Steuergeräte mit eigenen Schlüsseln ausgeführt. Funktion A basiert auf den Steuergeräten 312 und 322, Funktion B auf den Steuergeräten 322 und 324, Funktion C auf den Steuergeräten 324 und 332 und Funktion D auf dem Steuergerät 342. Jedes Steuergerät umfasst zumindest einen Schlüssel; Steuergeräte, die mehr als einer Funktion zugeordnet sind (z.B. 322; 324) können mehr als einen Schlüssel umfassen. Die Kommunikation zwischen den Steuergeräten kann durch die Schlüssel authentifiziert sein. Die Steuergeräte können beispielsweise bei der Fertigung mit Schlüsseln bedatet werden. Die Steuergeräte 312, 322, 324, 332 und 342 sind über eine gemeinsame Kommunikationsverbindung, etwa einen Bus 302, miteinander verbunden.

Fig. 3b zeigt ein Ausführungsbeispiel, bei dem die Freigabe eines Steuergeräts durch eine Transitivität von Fahrzeugaktionen (Zuständen) ausgelöst wird. Ablauf A 410 basiert auf den Steuergeräten 412 (beispielsweise ein Steuergerät für eine Kommunikation) und dem Steuergerät 422, Ablauf B 420 basiert auf den Steuergeräten 422 und 424, und Funktion C 430 basiert auf den Steuergeräten 424 und 432. Jedes Steuergerät umfasst zumindest einen Schlüssel; Steuergeräte, die mehr als einer Funktion zugeordnet sind (z.B. 422; 424) können mehr als einen Schlüssel umfassen. Die Kommunikation zwischen den Steuergeräten kann durch die Schlüssel authentifiziert sein. Die Steuergeräte 412, 424 und 432 sind über eine gemeinsame Kommunikationsverbindung, etwa einen Bus, miteinander verbunden. Wird nun Funktion C durch Steuergerät 424 ausgeführt (1) (etwa Steuergerät 424 basierend auf einem gesicherten Verbund oder basierend auf einer Verifikation von Identitäten einer Mehrzahl von weiteren Fahrzeugkomponenten freigegeben) und das Steuergerät 422 nach der Aktion C innerhalb des Ablaufs B darüber Benachrichtigt (2) (etwa über die zumindest eine Nachricht), so kann das Steuergerät 422 die Aktion B ausführen (3) (etwa das Steuergerät 422 als Steuergerät 20 freischalten) und nach Ausführen der Aktion B Steuermodul 412 benachrichtigen (4) (damit dieses transitiv freigeschalten werden kann), und somit eine Kommunikation des Steuermoduls 412 freigeben. Somit kann eine Freigabe durch nacheinander ausgeführte Aktionen im Fahrzeug ausgelöst werden. Eine Aktion, beispielsweise ein Klemmensignal, kann das Senden einer authentischen Nachricht auslösen (etwa der Nachricht von Steuergerät 424 zu Steuergerät 422, oder der Nachricht von Steuergerät 422 zu Steuergerät 412, die der zumindest einen Nachricht der Fign. 2a und 2b entsprechen kann), und damit die Freigabe des Steuergeräts 412 ermöglichen.

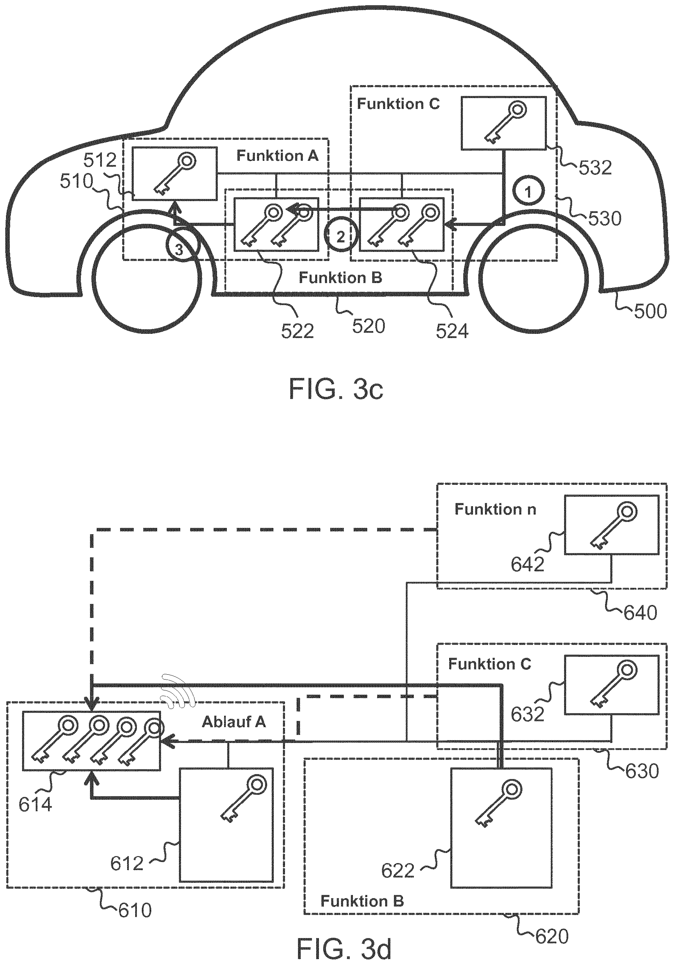

Fig. 3c zeigt ein Ausführungsbeispiel, bei dem die Freigabe eines Steuergeräts durch eine Transitivität von kryptographischen Operationen ausgelöst wird. Dabei können nacheinander ausgeführte, kryptographische Operationen unter Nutzung unterschiedlicher Schlüssel genutzt werden. Ein Fahrzeug 500 umfasst die Funktionen A 510, B 520 und C 530. Funktion A basiert auf den Steuergeräten 512 und 522, Funktion B basiert auf den Steuergeräten 522 und 524 und Funktion C basiert auf den Steuergeräten 524 und 532. Jedes Steuergerät umfasst zumindest einen Schlüssel; Steuergeräte, die mehr als einer Funktion zugeordnet sind (z.B. 522; 524) können mehr als einen Schlüssel umfassen. Die Kommunikation zwischen den Steuergeräten kann durch die Schlüssel authentifiziert sein. Die Steuergeräte sind über eine gemeinsame Kommunikationsverbindung, etwa einen Bus, miteinander verbunden. In einer ersten kryptographischen Operation (1) kann Steuergerät 532 Steuergerät 524 freigeben (etwa durch Legitimierung des Steuergeräts 532 gegenüber dem Steuergerät 524 mittels zumindest einer kryptografisch geschützten Nachricht), in einer zweiten kryptographischen Operation (2) kann Steuergerät 524 (transitiv) Steuergerät 522 freigeben (etwa durch Legitimierung des Steuergeräts 524 gegenüber dem Steuergerät 522 mittels zumindest einer kryptografisch geschützten Nachricht), und in einer dritten kryptographischen Operation (3) kann Steuergerät 522 (transitiv) Steuergerät 512 freigeben (wie zuvor). Die kryptographischen Operationen (1), (2) und (3) können aufeinander aufbauen, beispielsweise (zwingend) in dieser Reihenfolge ausgeführt werden. Die kryptographischen Operationen können das Senden einer kryptographischen Nachricht und/oder das Durchführen eines kryptographischen Challenge-Response (Aufforderung-Antwort)-Verfahrens umfassen.

Fig. 3d zeigt eine kryptographische Skalierbarkeit der Freigabe von Steuergeräten durch nacheinander ausgeführte Aktionen im Fahrzeug, wobei eine Aktion (beispielsweise ein Klemmensignal, ...) das Senden einer authentischen Nachricht auslöst. Fig. zeigt Ablauf A 610, Funktion B 620, Funktion C 630 und Funktion n 640. Ablauf A basiert auf dem (freizugebenden) Steuergerät 614 und dem Steuergerät 612, Funktion B basiert auf Steuergerät 622, Funktion C basiert auf Steuergerät 632 und Funktion n basiert auf Steuergerät 642. Jedes Steuergerät umfasst zumindest einen Schlüssel; kommuniziert ein Steuergerät mit mehr als einem anderen Steuergerät (etwa das freizugebende Steuergerät 614 mit den Steuergeräten 612, 622, 632 und 642, dann kann dieses Steuergerät mehrere Schlüssel (etwa 4 Schlüssel) umfassen. Die Kommunikation zwischen den Steuergeräten kann durch die Schlüssel authentifiziert sein. Die Steuergeräte sind (zumindest teilweise) über eine gemeinsame Kommunikationsverbindung, etwa einen Bus, miteinander verbunden. Dabei kann das freizugebende Steuergerät 614 basierend auf kryptographischen Operationen (die ähnlich implementiert sein können wie die kryptographischen Operationen von Fig. 3c) der anderen Steuergeräte 612, 622, 632, 642 - alternativ oder kumulativ - freigeschaltet werden. Beispielsweise kann jedes der Steuergeräte 612, 622, 632 und 642 jeweils Teil eines gesicherten Verbunds sein oder basierend auf einer Verifikation von Identitäten einer Mehrzahl von weiteren Fahrzeugkomponenten freigeschaltet werden. Steuergerät 614 kann ausgebildet sein, um die Steuergeräte 612, 622, 632 und 642 zu legitimieren, und falls eines (alternative Freischaltung) oder alle (kumulative Freischaltung) von ihnen freigeschalten sind, sich selbst freischalten.

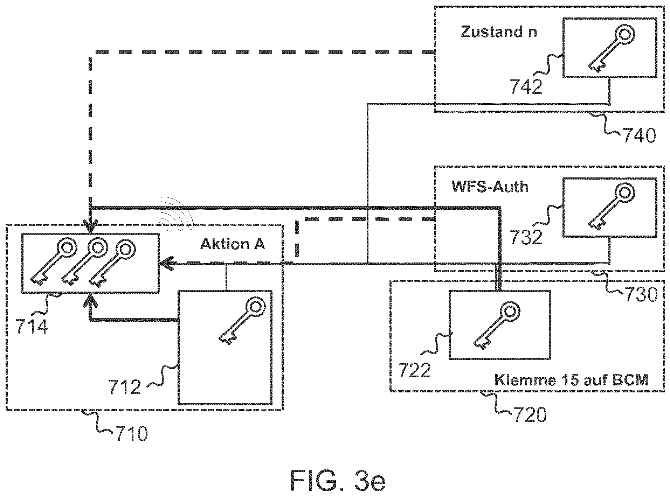

Fig. 3e zeigt eine Skalierbarkeit der Freigabe durch Fahrzeugaktionen (Zustände). Das System kann auf beliebig viele Steuergeräte skalieren. Von je mehr anderen Steuergeräten das Car2Car Steuergerät geschützte Funktionsdaten erhält, desto sicherer kann es sich beispielsweise sein, sich wirklich im Fahrzeug zu befinden. Fig. 3e zeigt Aktion A 710 und Funktionen B (Klemme 15 auf BCM) 720, C (Wegfahrsperren-Authentifizierung) 730 und N (Zustand n) 740. Aktion A basiert auf dem freizugebenden Steuergerät 714 und dem Steuergerät 712, Funktion B basiert auf Steuergerät 722, Funktion C basiert auf Steuergerät 732 und Funktion N basiert auf Steuergerät 742. Jedes Steuergerät umfasst zumindest einen Schlüssel; kommuniziert ein Steuergerät mit mehr als einem anderen Steuergerät (etwa das freizugebende Steuergerät 714 mit den Steuergeräten 712, 722, 732 und 742, dann kann dieses Steuergerät mehrere Schlüssel (etwa 4 Schlüssel) umfassen. Die Kommunikation zwischen den Steuergeräten kann durch die Schlüssel authentifiziert sein. Die Steuergeräte sind (zumindest teilweise) über eine gemeinsame Kommunikationsverbindung, etwa einen Bus, miteinander verbunden. Dabei kann das freizugebende Steuergerät 714 basierend auf Aktionen der anderen Steuergeräte 712, 722, 732, 742 - alternativ oder kumulativ - freigeschaltet werden. Beispielsweise kann jedes der Steuergeräte 712, 722, 732 und 742 jeweils Teil eines gesicherten Verbunds sein oder basierend auf einer Verifikation von Identitäten einer Mehrzahl von weiteren Fahrzeugkomponenten freigeschaltet werden. Steuergerät 714 kann ausgebildet sein, um die Steuergeräte 712, 722, 732 und 742 zu legitimieren, und falls eines (alternative Freischaltung) oder alle (kumulative Freischaltung) von ihnen freigeschalten sind, sich selbst freischalten. Die Skalierbarkeit kann inhaltlich durch weitere Steuergeräte und Zustände erreicht werden.

Mehr Details und Aspekte der Steuergeräte (Fahrzeugkomponenten) und/oder Fahrzeuge der Fign. 3a bis 3e werden in Verbindung mit dem Konzept oder Beispielen genannt, die vorher (z.B. Fig. 1a bis 2b) beschrieben wurden. Die Steuergeräte oder die Fahrzeuge können ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

Ein weiteres Ausführungsbeispiel ist ein Computerprogramm zur Durchführung zumindest eines der oben beschriebenen Verfahren, wenn das Computerprogramm auf einem Computer, einem Prozessor oder einer programmierbaren Hardwarekomponente abläuft. Ein weiteres Ausführungsbeispiele ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

| | | | |
|---|---|---|---|
| 10 | Vorrichtung | 320 | Funktion B |
| 12 | Schnittstelle | 322 | Steuergerät |
| 14 | Kontrollmodul | 324 | Steuergerät |
| 20 | (Zweite) Fahrzeugkomponente | 330 | Funktion C |
| 30 | Vorrichtung | 332 | Steuergerät |
| 32 | Schnittstelle | 340 | Funktion D |
| 34 | Kontrollmodul | 342 | Steuergerät |
| 50 | Erste Fahrzeugkomponente | 410 | Ablauf A |
| 100 | Fahrzeug | 412 | Steuergerät |
| 110 | Empfangen von Nachrichten | 420 | Ablauf B |
| 120 | Verifizieren einer Identität | 422 | Steuergerät |
| 130 | Freischalten der (zweiten) | 424 | Steuergerät |
| | Fahrzeugkomponente | 430 | Funktion C |
| 210 | Empfangen von zumindest einer Nachricht | 432 | Steuergerät |
| | | 500 | Fahrzeug |
| 220 | Legitimieren der zweiten Fahrzeugkomponente | 510 | Funktion A |
| 230 | Freischalten der ersten Fahrzeugkomponente | 512 | Steuergerät |
| | | 520 | Funktion B |
| 300 | Fahrzeug | 522 | Steuergerät |
| 310 | Funktion A | 524 | Steuergerät |
| 302 | Gemeinsame | 530 | Funktion C |
| | Kommunikationsverbindung / Bus | 532 | Steuergerät |
| 312 | Steuergerät | 610 | Ablauf A |

| | | | |
|---|---|---|---|
| 612 | Steuergerät | 712 | Steuergerät |
| 620 | Funktion B | 720 | Funktion B |
| 622 | Steuergerät | 722 | Steuergerät |
| 630 | Funktion C | 730 | Funktion C |
| 632 | Steuergerät | 732 | Steuergerät |
| 640 | Funktion n | 740 | Funktion n |
| 642 | Steuergerät | 742 | Steuergerät |
| 710 | Ablauf A | | |

## Patentansprüche

1. Vorrichtung (10) zum Freischalten einer Fahrzeugkomponente (20) eines Fahrzeugs (100), umfassend:
zumindest eine Schnittstelle (12), ausgebildet zur Kommunikation mit einer Mehrzahl von weiteren Fahrzeugkomponenten des Fahrzeugs (100);
ein Kontrollmodul (14), ausgebildet zum:
Steuern der zumindest einen Schnittstelle (12),
Empfangen von kryptografisch geschützten Nachrichten der Mehrzahl von weiteren Fahrzeugkomponenten des Fahrzeugs,
Verifizieren einer Identität der Mehrzahl von weiteren Fahrzeugkomponenten basierend auf den empfangenen kryptografisch geschützten Nachrichten und basierend auf gespeicherten Identifikationsdaten der Mehrzahl von weiteren Fahrzeugkomponenten,
wobei die Identifikationsdaten der Mehrzahl von weiteren Fahrzeugkomponenten kryptografische Informationen über die Mehrzahl von weiteren Fahrzeugkomponenten umfassen, wobei die Verifikation der Identität der Mehrzahl von weiteren Fahrzeugkomponenten erfolgreich ist, falls ein Anteil von innerhalb eines vordefinierten Zeitintervalls empfangenen kryptografisch geschützten Nachrichten der Mehrzahl von weiteren Fahrzeugkomponenten, die im Einklang stehen mit den gespeicherten kryptografischen Informationen, höher ist als ein Konfidenzschwellenwert, wobei die Nachrichten, auf denen die Verifizierung der Identität der Mehrzahl von weiteren Fahrzeugkomponenten basiert, Nachrichten sind, die zum Regelbetrieb der Fahrzeugkomponente (20) genutzt werden, und
Freischalten der Fahrzeugkomponente (20), falls die Verifikation der Identität der Mehrzahl von weiteren
Fahrzeugkomponenten erfolgreich ist.

2. Die Vorrichtung (10) gemäß Anspruch 1, wobei die kryptografisch geschützten Nachrichten kryptografisch signiert sind, wobei die kryptografisch geschützten Nachrichten kryptografisch verschlüsselt sind, und/oder wobei die kryptografisch geschützten Nachrichten einen basierend auf einem kryptografischen Schlüssel berechneten Wert umfassen.

3. Die Vorrichtung (10) gemäß Anspruch 1, wobei das Kontrollmodul (14) ausgebildet ist, um die Identität der Mehrzahl von weiteren Fahrzeugkomponenten durch eine Plausibilitätsprüfung eines Inhalts der empfangenen Nachrichten zu verifizieren.

4. Die Vorrichtung (10) gemäß einem der vorhergehenden Ansprüche, wobei die Nachrichten, auf denen die Verifizierung der Identität der Mehrzahl von weiteren Fahrzeugkomponenten basiert, Nachrichten sind, die nicht ausschließlich zum Zweck der Verifizierung der Identität der Mehrzahl von weiteren Fahrzeugkomponenten über die zumindest eine Schnittstelle (12) empfangen werden.

5. Die Vorrichtung (10) gemäß einem der vorhergehenden Ansprüche, wobei die Mehrzahl von weiteren Fahrzeugkomponenten einen Antriebsmotor des Fahrzeugs (100) und/oder ein Getriebe des Fahrzeugs (100) umfasst,
und/oder wobei die Mehrzahl von weiteren Fahrzeugkomponenten zumindest drei Fahrzeugkomponenten des Fahrzeugs (100) umfasst.

6. Die Vorrichtung (10) gemäß einem der vorhergehenden Ansprüche, wobei zumindest eine Fahrzeugkomponente der Mehrzahl von weiteren Fahrzeugkomponenten Teil eines gesicherten Verbunds von Fahrzeugkomponenten des Fahrzeugs (100) ist.

7. Die Vorrichtung (10) gemäß einem der vorhergehenden Ansprüche, wobei die Fahrzeugkomponente (20) ein Fahrzeug-zu-Fahrzeug-Kommunikationsmodul ist, und wobei die empfangenen Nachrichten, auf denen die Verifizierung der Identität der Mehrzahl von weiteren Fahrzeugkomponenten basiert, zumindest ein Element der Gruppe von Positionsdaten eines Navigationssatellitensystems zur Positionsbestimmung des Fahrzeugs (100), Lenkwinkelinformation des Fahrzeugs (100) und Geschwindigkeitsinformation des Fahrzeugs (100) umfasst, und wobei eine Fahrzeug-zu-Fahrzeug-Kommunikation des Fahrzeug-zu-Fahrzeug-Kommunikationsmoduls auf der Freischaltung des Fahrzeug-zu-Fahrzeug-Kommunikationsmoduls basiert.

8. Fahrzeug-zu-Fahrzeug-Kommunikationsmodul (20) mit der Vorrichtung (10) gemäß einem der vorhergehenden Ansprüche.

9. Verfahren zum Freischalten einer Fahrzeugkomponente (20) eines Fahrzeugs (100), umfassend:
Empfangen (110) von kryptografisch geschützten Nachrichten einer Mehrzahl von weiteren Fahrzeugkomponenten des Fahrzeugs (100);
Verifizieren (120) einer Identität der Mehrzahl von weiteren Fahrzeugkomponenten basierend auf den empfangenen kryptografisch geschützten Nachrichten und basierend auf gespeicherten Identifikationsdaten der Mehrzahl von weiteren Fahrzeugkomponenten, wobei die Identifikationsdaten der Mehrzahl von weiteren Fahrzeugkomponenten kryptografische Informationen über die Mehrzahl von weiteren Fahrzeugkomponenten umfassen, wobei die Verifikation der Identität der Mehrzahl von weiteren Fahrzeugkomponenten erfolgreich ist, falls ein Anteil von innerhalb eines vordefinierten Zeitintervalls empfangenen kryptografisch geschützten Nachrichten der Mehrzahl von weiteren Fahrzeugkomponenten, die im Einklang stehen mit den gespeicherten kryptografischen Informationen, höher ist als ein Konfidenzschwellenwert, wobei die Nachrichten, auf denen die Verifizierung der Identität der Mehrzahl von weiteren Fahrzeugkomponenten basiert, Nachrichten sind, die zum Regelbetrieb der Fahrzeugkomponente (20) genutzt werden; und
Freischalten (130) der Fahrzeugkomponente (20), falls die Verifikation der Identität der Mehrzahl von
weiteren Fahrzeugkomponenten erfolgreich ist.

10. Verfahren zum Freischalten einer ersten Fahrzeugkomponente (50) und einer zweiten Fahrzeugkomponente (20) eines Fahrzeugs (100), umfassend:
Empfangen (110), durch die zweite Fahrzeugkomponente (20) des Fahrzeugs (100), von kryptografisch geschützten Nachrichten einer Mehrzahl von weiteren Fahrzeugkomponenten des Fahrzeugs (100);
Verifizieren (120), durch die zweite Fahrzeugkomponente (20), einer Identität der Mehrzahl von weiteren Fahrzeugkomponenten basierend auf den empfangenen kryptografisch geschützten Nachrichten und basierend auf gespeicherten Identifikationsdaten der Mehrzahl von weiteren Fahrzeugkomponenten, wobei die Identifikationsdaten der Mehrzahl von weiteren Fahrzeugkomponenten kryptografische Informationen über die Mehrzahl von weiteren Fahrzeugkomponenten umfassen, wobei die Verifikation der Identität der Mehrzahl von weiteren Fahrzeugkomponenten erfolgreich ist, falls ein Anteil von innerhalb eines vordefinierten Zeitintervalls empfangenen kryptografisch geschützten Nachrichten der Mehrzahl von weiteren Fahrzeugkomponenten, die im Einklang stehen mit den gespeicherten kryptografischen Informationen, höher ist als ein Konfidenzschwellenwert, wobei die Nachrichten, auf denen die Verifizierung der Identität der Mehrzahl von weiteren Fahrzeugkomponenten basiert, Nachrichten sind, die zum Regelbetrieb der zweiten Fahrzeugkomponente (20) genutzt werden;
Freischalten (130) der zweiten Fahrzeugkomponente (20), falls die Verifikation der Identität der Mehrzahl von weiteren Fahrzeugkomponenten erfolgreich ist; Empfangen (210), durch die erste Fahrzeugkomponente (50), zumindest einer Nachricht von der zweiten Fahrzeugkomponente (20);
Legitimieren (220), durch die erste Fahrzeugkomponente (50), der zweiten Fahrzeugkomponente (20) basierend auf der zumindest einen von der zweiten Fahrzeugkomponente empfangenen Nachricht; und
Freischalten (230) der ersten Fahrzeugkomponente (50), falls die zumindest eine empfangene Nachricht impliziert, dass die zweite Fahrzeugkomponente (20) freigeschalten wurde und falls die Legitimierung der zweiten Fahrzeugkomponente (20) erfolgreich ist.

11. Programm mit einem Programmcode zum Durchführen zumindest eines der Verfahren gemäß einem der Ansprüche 9 oder 10, wenn der Programmcode auf einem Computer, einem Prozessor, einem Kontrollmodul oder einer programmierbaren Hardwarekomponente ausgeführt wird.

12. System zum Freischalten einer ersten Fahrzeugkomponente (50) eines Fahrzeugs (100) umfassend Mittel zur Ausführung des Verfahrens nach Anspruch 10.

## Claims

1. Device (10) for releasing a vehicle component (20) of a vehicle (100), comprising:
at least one interface (12) designed for communication with a plurality of further vehicle components of the vehicle (100);
a control module (14) designed to:
control the at least one interface (12),
receive cryptographically-protected messages of the plurality of further vehicle components of the vehicle,
verify an identity of the plurality of further vehicle components based upon the received cryptographically-protected messages and based upon stored identification data of the plurality of further vehicle components, wherein the identification data of the plurality of further vehicle components comprise cryptographic information about the plurality of further vehicle components, wherein the verification of the identity of the plurality of further vehicle components is successful if a portion of cryptographically-protected messages, received within a predefined time interval, of the plurality of further vehicle components that are consistent with the stored cryptographic information is greater than a confidence threshold value, wherein the messages upon which the verification of the identity of the plurality of further vehicle components is based are messages used for the normal operation of the vehicle component (20), and
release the vehicle component (20) if the verification of the identity of the plurality of further vehicle components is successful.

2. Device (10) according to claim 1, wherein the cryptographically-protected messages are cryptographically signed, wherein the cryptographically-protected messages are cryptographically encrypted, and/or wherein the cryptographically-protected messages comprise a value calculated on the basis of a cryptographic key.

3. Device (10) according to claim 1, wherein the control module (14) is designed to verify the identity of the plurality of further vehicle components by a plausibility check of a content of the received messages.

4. Device (10) according to one of the preceding claims, wherein the messages upon which the verification of the identity of the plurality of further vehicle components is based are messages that are not received exclusively for the purpose of verifying the identity of the plurality of further vehicle components via the at least one interface (12).

5. Device (10) according to one of the preceding claims, wherein the plurality of further vehicle components comprises a drive engine of the vehicle (100) and/or a transmission of the vehicle (100),
and/or wherein the plurality of further vehicle components comprises at least three vehicle components of the vehicle (100).

6. Device (10) according to one of the preceding claims, wherein at least one vehicle component of the plurality of further vehicle components is part of a secured combination of vehicle components of the vehicle (100).

7. Device (10) according to one of the preceding claims, wherein the vehicle component (20) is a vehicle-to-vehicle communications module, and wherein the received messages, upon which the verification of the identity of the plurality of further vehicle components is based, comprise at least one element of the group of position data of a navigation satellite system for determining the position of the vehicle (100), steering angle information of the vehicle (100), and velocity information of the vehicle (100), and wherein a vehicle-to-vehicle communication of the vehicle-to-vehicle communications module is based upon the release of the vehicle-to-vehicle communications module.

8. Vehicle-to-vehicle communications module (20) having the device (10) according to one of the preceding claims.

9. Method for releasing a vehicle component (20) of a vehicle (100), comprising:
receiving (110) cryptographically-protected messages of the plurality of further vehicle components of the vehicle (100);
verifying (120) an identity of the plurality of further vehicle components based upon the received cryptographically-protected messages and based upon stored identification data of the plurality of further vehicle components, wherein the identification data of the plurality of further vehicle components comprise cryptographic information about the plurality of further vehicle components, wherein the verification of the identity of the plurality of further vehicle components is successful if a portion of cryptographically-protected messages, received within a predefined time interval, of the plurality of further vehicle components that are consistent with the stored cryptographic information is greater than a confidence threshold value, wherein the messages upon which the verification of the identity of the plurality of further vehicle components is based are messages used for the normal operation of the vehicle component (20); and
releasing (130) the vehicle component (20) if the verification of the identity of the plurality of further vehicle components is successful.

10. Method for releasing a first vehicle component (50) and a second vehicle component (20) of a vehicle (100), comprising:
receiving (110), by the second vehicle component (20) of the vehicle (100), cryptographically-protected messages of a plurality of further vehicle components of the vehicle (100);
verifying (120), by the second vehicle component (20), an identity of the plurality of further vehicle components based upon the received cryptographically-protected messages and based upon stored identification data of the plurality of further vehicle components, wherein the identification data of the plurality of further vehicle components comprise cryptographic information about the plurality of further vehicle components, wherein the verification of the identity of the plurality of further vehicle components is successful if a portion of cryptographically-protected messages, received within a predefined time interval, of the plurality of further vehicle components that are consistent with the stored cryptographic information is greater than a confidence threshold value, wherein the messages upon which the verification of the identity of the plurality of further vehicle components is based are messages used for the normal operation of the second vehicle component (20);
releasing (130) the second vehicle component (20) if the verification of the identity of the plurality of further vehicle components is successful;
receiving (210), by the first vehicle component (50), at least one message from the second vehicle component (20);
authorizing (220), by the first vehicle component (50), the second vehicle component (20) based upon the at least one message received from the second vehicle component; and
releasing (230) the first vehicle component (50) if the at least one received message implies that the second vehicle component (20) was released, and if the second vehicle component (20) is successfully authorized.

11. Program having a program code for carrying out at least one of the methods according to one of claims 9 through 10 if the program code is executed on a computer, a processor, a control module, or a programmable hardware component.

12. System for releasing a first vehicle component (50) of a vehicle (100), comprising means for executing the method according to claim 10.

## Revendications

1. Dispositif (10) pour la déconnexion d'un composant de véhicule (20) d'un véhicule (100), comprenant :
au moins une interface (12), conçue pour la communication avec une pluralité d'autres composants de véhicule du véhicule (100) ;
un module de commande (14) conçu pour :
la commande de l'au moins une interface (12),
la réception de messages protégés par des moyens cryptographiques de la pluralité d'autres composants de véhicule du véhicule,
la vérification d'une identité de la pluralité d'autres composants de véhicule sur la base des messages protégés par des moyens cryptographiques reçus et sur la base de données d'identification enregistrées de la pluralité d'autres composants de véhicule, les données d'identification de la pluralité d'autres composants de véhicule comprenant des informations cryptographiques sur la pluralité d'autres composants de véhicule, la vérification de l'identité de la pluralité d'autres composants de véhicule étant réussie, si un pourcentage de messages protégés par des moyens cryptographiques de la pluralité d'autres composants de véhicule reçus durant un intervalle de temps prédéfini, lesquels sont conformes aux informations cryptographiques enregistrées, est supérieur à une valeur de seuil de fiabilité, les messages, sur lesquels se base la vérification de l'identité de la pluralité d'autres composants de véhicule, étant des messages qui sont utilisés pour le fonctionnement normal du composant de véhicule (20), et
la déconnexion du composant de véhicule (20), si la vérification de l'identité de la pluralité d'autres composants de véhicule est réussie.

2. Dispositif (10) selon la revendication 1, dans lequel les messages protégés par des moyens cryptographiques sont signés de manière cryptographique, dans lequel les messages protégés par des moyens cryptographiques sont codés de manière cryptographique, et/ou dans lequel les messages protégés par des moyens cryptographiques comprennent une valeur calculée sur la base d'une clé cryptographique.

3. Dispositif (10) selon la revendication 1, dans lequel le module de commande (14) est conçu pour vérifier l'identité de la pluralité d'autres composants de véhicule par un contrôle de plausibilité d'un contenu des messages reçus.

4. Dispositif (10) selon l'une quelconque des revendications précédentes, dans lequel les messages, sur lesquels se base la vérification de l'identité de la pluralité d'autres composants de véhicule, sont des messages qui ne sont pas reçus à travers l'au moins une interface (12) exclusivement à des fins de vérification de l'identité de la pluralité d'autres composants de véhicule.

5. Dispositif (10) selon l'une quelconque des revendications précédentes, dans lequel la pluralité d'autres composants de véhicule comprend un moteur d'entraînement du véhicule (100) et/ou une transmission du véhicule (100),
et/ou dans lequel la pluralité d'autres composants de véhicule comprend au moins trois composants de véhicule du véhicule (100).

6. Dispositif (10) selon l'une quelconque des revendications précédentes, dans lequel au moins un composant de véhicule de la pluralité d'autres composants de véhicule fait partie d'un ensemble sécurisé de composants de véhicule du véhicule (100).

7. Dispositif (10) selon l'une quelconque des revendications précédentes, dans lequel le composant de véhicule (20) est un module de communication véhicule-à-véhicule, et dans lequel les messages reçus, sur lesquels se base la vérification de l'identité de la pluralité d'autres composants de véhicule, comprennent au moins un élément du groupe constitué de données de position d'un système de navigation par satellite pour la détermination de la position du véhicule (100), d'informations d'angle de direction du véhicule (100) et d'informations de vitesse du véhicule (100), et dans lequel une communication véhicule-à-véhicule du module de communication véhicule-à-véhicule se base sur la déconnexion du module de communication véhicule-à-véhicule.

8. Module de communication véhicule-à-véhicule (20) comprenant le dispositif (10) selon l'une quelconque des revendications précédentes.

9. Procédé pour la déconnexion d'un composant de véhicule (20) d'un véhicule (100), comprenant :
la réception (110) de messages protégés par des moyens cryptographiques d'une pluralité d'autres composants de véhicule du véhicule (100) ;
la vérification (120) d'une identité de la pluralité d'autres composants de véhicule sur la base des messages protégés par des moyens cryptographiques reçus et sur la base de données d'identification enregistrées de la pluralité d'autres composants de véhicule, les données d'identification de la pluralité d'autres composants de véhicule comprenant des informations cryptographiques sur la pluralité d'autres composants de véhicule, la vérification de l'identité de la pluralité d'autres composants de véhicule étant réussie, si un pourcentage de messages protégés par des moyens cryptographiques de la pluralité d'autres composants de véhicule reçus durant un intervalle de temps prédéfini, lesquels sont conformes aux informations cryptographiques enregistrées, est supérieur à une valeur de seuil de fiabilité, les messages, sur lesquels se base la vérification de l'identité de la pluralité d'autres composants de véhicule, étant des messages qui sont utilisés pour le fonctionnement normal du composant de véhicule (20), et
la déconnexion (130) du composant de véhicule (20), si la vérification de l'identité de la pluralité d'autres composants de véhicule est réussie.

10. Procédé pour la déconnexion d'un premier composant de véhicule (50) et d'un deuxième composant de véhicule (20) d'un véhicule (100), comprenant :
la réception (110), par le deuxième composant de véhicule (20) du véhicule (100), de messages protégés par des moyens cryptographiques d'une pluralité d'autres composants de véhicule du véhicule (100) ;
la vérification (120), par le deuxième composant de véhicule (20), d'une identité de la pluralité d'autres composants de véhicule sur la base des messages protégés par des moyens cryptographiques reçus et sur la base de données d'identification enregistrées de la pluralité d'autres composants de véhicule, les données d'identification de la pluralité d'autres composants de véhicule comprenant des informations cryptographiques sur la pluralité d'autres composants de véhicule, la vérification de l'identité de la pluralité d'autres composants de véhicule étant réussie, si un pourcentage de messages protégés par des moyens cryptographiques de la pluralité d'autres composants de véhicule reçus durant un intervalle de temps prédéfini, lesquels sont conformes aux informations cryptographiques enregistrées, est supérieur à une valeur de seuil de fiabilité, les messages, sur lesquels se base la vérification de l'identité de la pluralité d'autres composants de véhicule, étant des messages qui sont utilisés pour le fonctionnement normal du deuxième composant de véhicule (20) ;
la déconnexion (130) du deuxième composant de véhicule (20), si la vérification de l'identité de la pluralité d'autres composants de véhicule est réussie ;
la réception (210), par le premier composant de véhicule (50), d'au moins un message du deuxième composant de véhicule (20) ;
la légitimation (220), par le premier composant de véhicule (50), du deuxième composant de véhicule (20) sur la base de l'au moins un message reçu du deuxième composant de véhicule ; et
la déconnexion (230) du premier composant de véhicule (50), si l'au moins un message reçu implique que le deuxième composant de véhicule (20) a été déconnecté et si la légitimation du deuxième composant de véhicule (20) est réussie.

11. Programme comprenant un code de programme permettant de mettre en œuvre au moins un des procédés selon l'une quelconque des revendications 9 ou 10, lorsque le code de programme est exécuté sur un ordinateur, un processeur, un module de commande ou un composant matériel programmable.

12. Système pour la déconnexion d'un premier composant de véhicule (50) d'un véhicule (100) comprenant des moyens pour l'exécution du procédé selon la revendication 10.
